# FASCICULE DE BREVET EUROPEEN

(11) **EP 0 503 985 B1**
(45) Date de publication et mention de la délivrance du brevet: **07.12.1994**
(21) Numéro de dépôt: 92400298.3
(22) Date de dépôt: 05.02.1992
(51) Int. Cl.: G01L 1/24

(54) **Capteur de force et appareillage pour capter le courant d'une ligne caténaire depuis une motrice utilisant ce capteur**
Kraftsensor und Apparat zur Stromaufnahme einer Kettenfahrleitung aus einem Triebwagen bei Anwendung dieses Sensors
Force sensor and apparatus for sensing the current of a catenary line from a motor by using this sensor

(30) Priorité: 15.03.1991 FR 9103208
(43) Date de publication de la demande: 16.09.1992
(73) Titulaire: FAIVELEY TRANSPORT, 93200 Saint-Denis (FR)
(72) Inventeur: Harmer, Alan, CH-1228 Plan les Ouates, Genève (CH); Cathala, Jacques, F-37510 Ballan-Mire (FR); Forte, Pascal, F-37200 Tours (FR)
(74) Mandataire: Keib, Gérard

(56) Documents cités:
- EP-A- 0 190 922
- EP-A- 0 240 100
- EP-A- 0 395 504
- WO-A-85/00221
- US-A- 4 436 995

## Description

La présente invention concerne un dispositif pour mesurer une force ainsi qu'un appareillage pour capter le courant électrique d'une ligne caténaire depuis une motrice utilisant ce dispositif.

Le dispositif de mesure de l'invention comporte un capteur de force à fibre optique dans lequel au moins un tronçon de sollicitation de la fibre optique est disposé dans une zone de transmission d'effort adaptée pour exercer une contrainte sur la fibre en réponse à l'application de la force à mesurer.

On connaît quatre catégories principales de capteurs à fibre optique, suivant la manière dont on mesure la modulation de la lumière par l'effet physique (force) dans le capteur: variation d'intensité; interférométrie; polarimétrie; et variation de la longueur d'onde.

La présente demande décrit en détail un capteur basé sur la mesure de l'intensité de la lumière, mais elle n'est pas limitée à cette méthode, et peut être appliquée à d'autres méthodes de modulation de la lumière.

Pour chaque méthode de modulation de la lumière, il existe différentes manières de construire un capteur impliquant différents principes de mesure (voir A.L. Harmer: "Principles of Fiber Optic Sensors and Instrumentation" Measurement and Control, vol. 15, p. 143-151, 1982). Par exemple, si on choisit la modulation de l'intensité de la lumière, on peut envisager un capteur avec
(i) une fibre qui se déplace par rapport à une deuxième fibre;
(ii) un obturateur qui se déplace en fonction de la force et coupe la lumière entre deux fibres;
(iii) une surface réfléchissante qui se déplace en fonction de la force et qui fait varier la quantité de lumière reçue par une fibre;
(iv) une modulation par des effets de microcourbures de la fibre.

Le principe de transduction (modulation de la lumière) par l'effet des microcourbures est bien connu, et il est décrit dans plusieurs brevets tels que le GB-A-1 584 173, ou le GB-A-2 015 844.

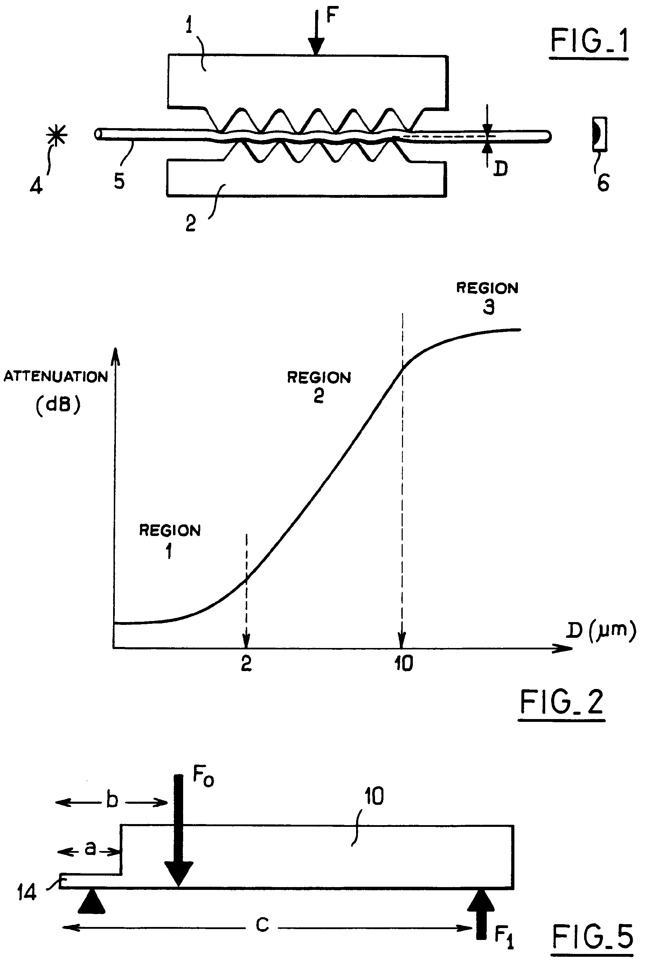

Dans une réalisation générale d'un capteur par microcourbures (figure 1), une fibre optique 5 est placée entre deux plaques 1, 2 usinées avec une série de dents qui forment une modulation des surfaces de pincement des plaques 1, 2 le long de la fibre optique 5. Les dents répartissent la force appliquée F sur la fibre 5 en des points régulièrement espacés le long de la fibre 5, et la fibre 5 se déforme alors en courbes sensiblement sinusoïdales (microcourbures). Quand une force est appliquée aux plaques 1, 2, il se produit un déplacement d'une des plaques vers l'autre et la fibre 5 se plie davantage. Le déplacement est contrôlé par la raideur de la fibre 5. Les microcourbures sont donc accrues sous l'effet de la force, ce qui provoque un mélange de modes dans le coeur de la fibre 5 avec la création de modes plus élevés. La fibre 5 est connectée à une source de lumière 4 et la lumière transmise est mesurée par un photodétecteur 6. Il y a une perte de lumière, soit par le transfert de l'énergie optique dans les modes élevés qui pénètrent dans la gaine de la fibre et qui sont ensuite absorbés, soit par rayonnement de la lumière vers l'extérieur de la fibre. La fibre peut être soit multimode (à saut d'indice ou à gradient d'indice) soit monomode. L'utilisation d'une fibre multimode à gradient d'indice est particulièrement avantageuse à cause d'une sensibilité élevée; et la périodicité des dents a de préférence le même pas que la distance optimale de couplage de modes dans le coeur de la fibre (voir US-A-4 572 950).

Les principaux avantages de ces capteurs de force à fibre optique sont l'isolement électrique du capteur permettant son utilisation en présence de hautes tensions, l'absence de perturbation par interférence électromagnétique, et un poids et un encombrement faibles, ce qui les rend faciles à intégrer dans une structure mécanique préexistante.

Ces capteurs sont notamment bien adaptés pour mesurer l'effort de contact entre une ligne caténaire et le pantographe d'une motrice ferroviaire. Cet effort de contact est considérablement modifié notamment lorsque des violentes rafales de vent perturbent le captage du courant par le pantographe. Un capteur de force, intégré dans l'archet du pantographe, permet de mesurer cet effort et donc de le régler par asservissement rétroactif pour maintenir une force acceptable entre le pantographe et la ligne caténaire. La précédente demande de brevet FR-A-2 646 381 (EP-A-395 504) de la demanderesse décrit le montage d'un tel capteur de force à fibre optique sur un pantographe.

L'utilisation de ces capteurs n'est pas limitée à cette application spécifique. Ils peuvent être appliqués pour mesurer des forces dans beaucoup d'autres circonstances, par exemple dans des machines d'usinage, ou de soudure à l'arc, et dans de multiples applications dans l'industrie.

Cependant, des difficultés sont rencontrées dans la mise en oeuvre de ces capteurs. En général, on ne peut pas appliquer la force à mesurer directement sur la fibre optique car les déformations qui en résulteraient seraient trop importantes et risqueraient de détériorer irréversiblement la fibre. Une solution à ce problème de fragilité est parfois proposée en faisant s'exercer la force sur un corps d'épreuve qui subit un déplacement précis proportionnel à la force, ce déplacement étant transmis aux surfaces de pincement- de la fibre optique, ce qui réduit l'amplitude de la modulation et donc les risques de rupture.

L'avantage d'une telle structure est que le corps d'épreuve absorbe une grande partie de l'effort à mesurer (plus que 90%). Mais les exigences de précision d'usinage sont très sévères. La fibre répond typiquement à un déplacement maximal de 10 microns. Pour assurer une précision de mesure de 1%, il faut une précision d'usinage (pour l'espacement entre les dents) inférieure à 0,1 micron. Par ailleurs, différents paramètres peuvent conduire à des erreurs de mesure: une variation de la température peut changer des dimensions de la structure par dilatation thermique; les parties mécaniques, notamment le corps d'épreuve, subissent une certaine fatigue; et la gaine de la fibre (même avec une gaine en plastique dure ou en aluminium) se comprime au cours du temps. Ces déviations entraînent des erreurs: une variation d'un micron de l'espacement entre les dents équivaut typiquement à 10% d'erreur.

La réponse d'une fibre optique en fonction du déplacement transversal D qui lui est appliqué dans un agencement tel que celui de la figure 1 est illustrée par le graphique de la figure 2. L'atténuation lumineuse dans la fibre optique est une fonction du déplacement d'une plaque par rapport à l'autre, et de la courbure de la fibre. La courbe d'atténuation avec le déplacement D a une forme de "S". On peut distinguer 3 régions:

**Région 1**. La partie initiale de la courbe est plate. Ceci est dû au jeu dans les pièces mécaniques, et au mouvement des dents avant qu'elles entrent en contact avec la fibre et appliquent l'effort à celle-ci. Typiquement, la fibre est déformée d'environ 2 microns dans cette région.

**Région 2**. La partie centrale de la courbe d'atténuation est quasi-linéaire avec le déplacement D. Cette partie définit la zone de fonctionnement du capteur.

**Région 3**. Avec un déplacement élevé (typiquement supérieur à 10 microns), la courbe est plate, à cause d'une saturation de l'atténuation de la lumière.

Deux problèmes se posent avec un capteur à fibre optique, et il faut prévoir deux réglages importants pour faire fonctionner la fibre avec une bonne reproductibilité:
(i) il faut appliquer une précontrainte (de l'ordre de quelques microns) pour faire opérer le capteur dans la région 2. La précontrainte applique un effort au capteur en condition de charge nulle pour déplacer l'origine de la courbe d'atténuation vers la région linéaire (région 2). Néanmoins, pendant la durée de vie du capteur, il se produit généralement un vieillissement des pièces mécaniques, de la fixation de la fibre, et de la gaine protectrice autour de la fibre, qui modifie cette précontrainte;
(ii) on constate une variation de la sensibilité d'un capteur à l'autre selon leur fabrication, due aux incertitudes sur les dimensions et les caractéristiques optiques de la fibre, et aux tolérances de fabrication des pièces mécaniques du capteur. Donc il faut prévoir un réglage de la sensibilité pendant le montage du capteur pour que tous les capteurs aient les mêmes performances.

Le but de la présente invention est de proposer un nouveau dispositif pour mesurer une force qui résolve les problèmes des réalisations connues, notamment en transmettant directement la force à mesurer à la fibre sans risquer d'endommager celle-ci.

L'invention vise ainsi un dispositif pour mesurer une force comprenant une fibre optique de détection dont les extrémités comportent des moyens de raccordement respectivement à une source de lumière et à au moins un détecteur de lumière, au moins un tronçon de sollicitation de la fibre optique de détection étant disposé dans une zone de transmission d'effort adaptée pour exercer une contrainte sur le tronçon de sollicitation de la fibre optique de détection en réponse à l'application de la force à mesurer.

Suivant l'invention, ce dispositif est caractérisé en ce qu'il comprend un bras articulé autour d'un axe de pivotement, en ce que des moyens d'application de la force à mesurer sont montés sur le bras et en ce que la zone de transmission d'effort est définie en partie par des moyens solidaires du bras.

Grâce à ce dispositif, la fibre optique de détection est soumise directement à la force à mesurer sans qu'il y ait déplacement ou déformation d'un corps d'épreuve intermédiaire. On s'affranchit ainsi des problèmes entraînés par ce corps d'épreuve (exigences de précision sévères, vieillissement, difficulté de réglage...). Cependant, dans le cas où la force à mesurer est relativement importante, seule une fraction de la force à mesurer est appliquée sur la fibre optique, avec une proportion constante déterminée par le rapport des bras de levier de la force à mesurer et de la force de réaction par la fibre optique, relativement à l'axe de pivotement du bras. On évite ainsi l'endommagement de la fibre qui se produirait si la totalité de la force lui était transmise. On réalise donc un capteur de force ayant tous les avantages précités des capteurs à fibre optique avec en outre une précision et une fiabilité accrues. Ce capteur peut être réalisé suivant le principe de mesure de l'atténuation lumineuse provoquée par des microcourbures, auquel cas la zone de transmission d'effort comporte une modulation le long de la fibre optique qui est alors de préférence une fibre multimode. Il peut également être réalisé suivant un autre principe de mesure, par exemple, par polarimétrie avec une fibre monomode.

Suivant une version préférée de l'invention, les moyens d'application de la force à mesurer présentent une liberté de rotation par rapport au bras selon une direction sensiblement parallèle à l'axe de pivotement du bras.

Cette liberté de rotation assure que l'application de la force à mesurer par le dispositif ne provoque aucune transmission de moment indésirable à la fibre optique.

De manière avantageuse, le dispositif comprend des moyens de précontrainte, par exemple des moyens élastiques, pour exercer un effort de précontrainte sur le tronçon de sollicitation de la fibre optique de détection indépendamment de l'application de la force à mesurer. La précontrainte de la fibre permet au capteur d'avoir une réponse sensiblement linéaire. Il est particulièrement avantageux que ces moyens de précontrainte soient sous forme d'une lame élastique dont la flexion définit en outre l'axe de pivotement du bras par rapport à un support. Dans ce cas, le support, la lame et au moins une partie du bras peuvent former un corps monobloc, ce qui présente de nombreux avantages, relatifs notamment à la stabilité de la réponse du capteur en fonction de la température et à la réduction des jeux mécaniques et du vieillissement des pièces.

Selon une autre version préférée de l'invention, le dispositif comprend des moyens de réglage de sensibilité pour faire varier le rapport des distances entre, d'une part, la distance séparant l'axe de pivotement du bras et le tronçon de sollicitation de la fibre optique de détection et, d'autre, part, la distance séparant l'axe de pivotement du bras et le point d'application de la force à mesurer sur le bras. Le réglage de sensibilité permet l'étalonnage du capteur pour lui donner une réponse précise et reproductible. Il est alors possible de monter plusieurs capteurs agissant en série sur la même fibre optique en ajoutant simplement les efforts mesurés car on peut donner à ces capteurs la même sensibilité en réponse linéaire sans avoir à satisfaire des exigences de fabrication trop sévères.

Un autre aspect de la présente invention concerne un appareillage pour capter le courant électrique d'une ligne caténaire depuis une motrice, comprenant une structure tubulaire déployable, un archet disposé à la partie supérieure de la structure tubulaire et supportant au moins une bande de frottement, et des moyens pour appliquer l'archet contre la ligne caténaire, cet appareillage utilisant un dispositif de mesure tel que défini ci-dessus. Conformément à l'invention, cet appareillage est caractérisé en ce que chaque zone de transmission d'effort sur un tronçon de sollicitation d'une fibre optique de détection est définie par des moyens reliés à une bande de frottement et par des moyens solidaires de l'archet.

Ce montage permet, comme on l'a mentionné précédemment, d'effectuer un asservissement rétroactif de l'effort de contact entre les bandes de frottement et la ligne caténaire sur la base de signaux de mesure d'effort précis et fiables.

D'autres particularités et avantages de la présente invention apparaîtront dans la description détaillée ci-dessous, lue conjointement aux dessins annexés, dans lesquels:
- la figure 1, précédemment discutée, représente schématiquement un capteur de force à fibre optique par microcourbures;
- la figure 2, précédemment discutée, est un graphique illustrant la réponse du capteur de la figure 1;
- la figure 3 est une vue éclatée en perspective d'un capteur utilisé dans l'invention;
- la figure 4 est une vue en perspective du capteur de la figure 3 après assemblage;
- la figure 5 est un schéma utile pour expliquer le fonctionnement du capteur des figures 3 et 4;
- la figure 6 illustre schématiquement un second mode de réalisation d'un capteur utilisable dans l'invention;
- les figures 7 et 8 sont des vues en coupe d'une fibre optique dans le mode de réalisation de la figure 6 ;
- la figure 9 représente un circuit optique utilisable dans l'invention ;
- la figure 10 illustre un détail de la figure 9 ;
- la figure 11 représente schématiquement un autre circuit optique utilisable dans l'invention ;
- la figure 12 illustre un montage de fibres optiques pour mesurer l'effort de contact entre un pantographe et une ligne caténaire;
- la figure 13 est une vue en élévation de la partie supérieure d'un pantographe suivant l'invention;
- la figure 14 est une vue de dessus partielle du pantographe de la figure 13;
- la figure 15 est une vue suivant le plan X-X de la figure 14;
- la figure 16 représente une vue en plan avec arrachement partiel d'une partie du pantographe de la figure 13 ;
- la figure 17 est une vue en coupe suivant le plan Y-Y de la figure 16 ; et
- la figure 18 est une vue analogue à celle de la figure 17 dans une variante de réalisation du pantographe.

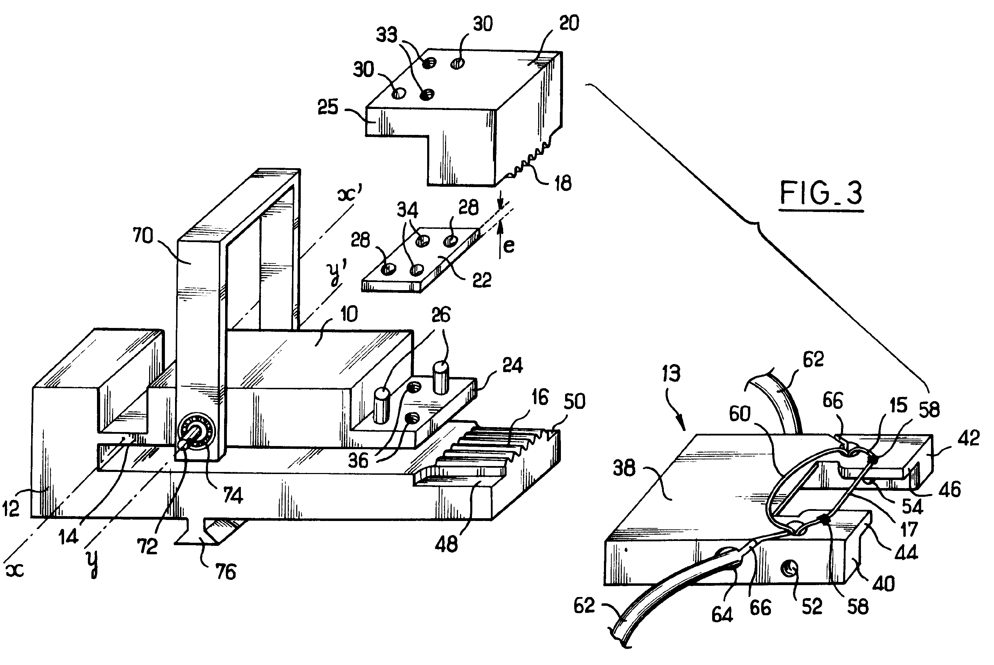

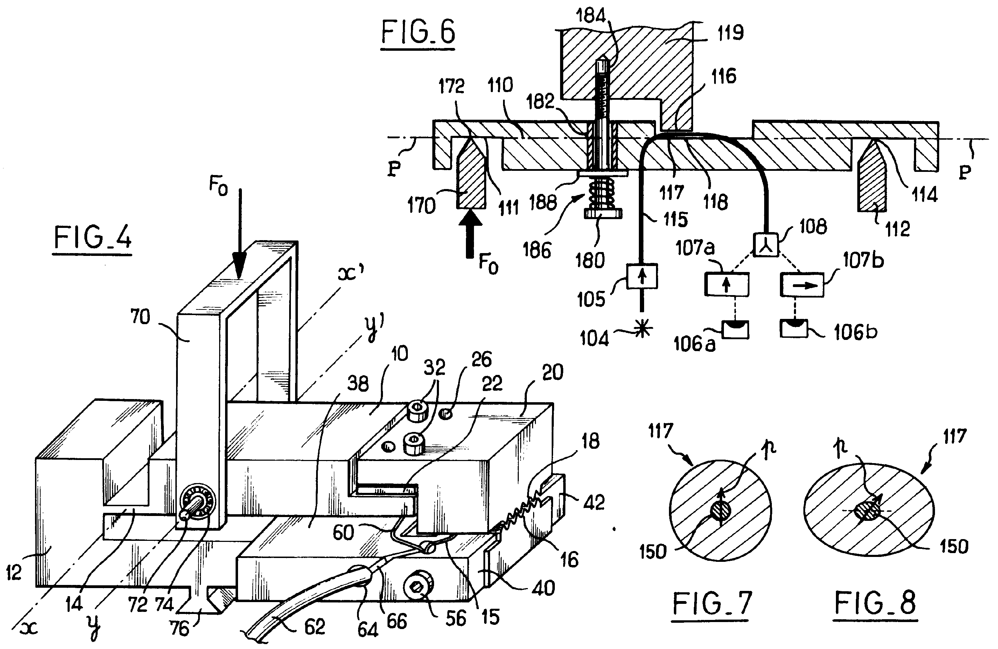

Dans la description ci-dessous, on désignera par "capteur" une structure telle que celle représentée aux figures 3 et 4, permettant de modifier les caractéristiques de la lumière se propageant dans la fibre optique en réponse à l'application d'une force et donc de générer une modulation d'un signal optique représentative de cette force. On désignera par "dispositif de mesure", un système composé notamment d'une ou plusieurs fibres optiques de détection et d'un ou plusieurs capteurs tels que définis ci-dessus.

En référence aux figures 3 et 4, un capteur par microcourbures d'un dispositif suivant l'invention comprend un bras 10 articulé sur un support 12 autour d'un axe de pivotement x-x′ défini par une lame 14 reliant le bras 10 au support 12. La partie inférieure du support 12 s'étend parallèlement au bras 10 et son extrémité opposée à la lame d'articulation 14 comporte une première surface de pincement 16 faisant face à une seconde surface de grincement 18 solidaire du bras 10 (voir figure 4). Lorsque le capteur est assemblé (figure 4), un tronçon de sollicitation 17 d'une fibre optique de détection 15 portée par un organe porte-fibre 13 est disposé dans la zone de transmission d'effort définie entre les surfaces de pincement 16, 18 et s'étend dans une direction parallèle à l'axe de pivotement x-x′ du bras 10. Une extrémité de la fibre optique de détection 15 comporte des moyens de raccordement à une source de lumière (diode électroluminescente ou diode laser) et l'autre extrémité comporte des moyens de raccordement à un photodétecteur.

Les deux surfaces de pincement 16, 18 présentent chacune une modulation sous forme d'une succession de nervures qui, dans l'exemple représenté, sont parallèles à la direction du bras 10, c'est-à-dire perpendiculaires au tronçon de sollicitation 17 de la fibre de détection 15. Les nervures sont séparées les unes des autres par un écart constant déterminé en fonction des propriétés de propagation lumineuse dans la fibre optique utilisée (voir US-A-4 572 950). Les nervures respectives des surfaces de pincement 16, 18 sont décalées les unes par rapport aux autres, le long du tronçon de sollicitation 17 de la fibre optique de détection 15 lorsque celle-ci est mise en place de sorte que les surfaces de pincement 16, 18 provoquent des microcourbures du tronçon de sollicitation 17 de la fibre 15 en réponse à un effort de pincement transversal (voir figure 1).

La seconde surface de pincement 18 fait partie d'un bloc 20 constituant l'extrémité du bras 10 opposée à la lame d'articulation 14. Ce bloc 20 est monté sur le corps du bras 10 avec interposition d'une cale 22 dont l'épaisseur e est déterminée comme on le verra plus loin. Le corps du bras 10 se termine par une partie en saillie 24 en forme de plaquette parallèle à la lame 14. Le bloc d'extrémité 20 est fixé sur cette plaquette 24 par un prolongement 25 qui repose sur la plaquette 24 avec interposition de la cale 22. Le positionnement de la cale 22 et du bloc 20 sur le corps du bras 10 est assuré par deux goupilles cylindriques 22 portées par la plaquette 24 et traversant des trous complémentaires 28, 30 prévus respectivement dans la cale 22 et dans le prolongement 25 du bloc 20. Le bloc 20 est rendu solidaire du corps du bras 10 par deux vis 32 montées au-dessus du bloc 20, traversant des trous 33, 34 prévus respectivement dans le prolongement 25 du bloc 20 et dans la cale 22, et venant en prise dans des trous filetés 36 portés par la plaquette 24. La surface supérieure de la plaquette 24, la cale 22 et la surface inférieure du prolongement 25 du bloc 20 sont parallèles à la seconde surface de pincement 18 portée par le bloc 20 de sorte qu'en modifiant l'épaisseur e de la cale 22, on fait varier l'écart séparant les surfaces de pincement 16, 18 qui restent parallèles entre elles.

Le corps du bras 10, la lame 14 et le support 12 sont réalisés en un seul bloc, par exemple en matériau métallique. La lame 14 fournissant l'axe de pivotement x-x′ du bras 10 assure en outre une fonction élastique de précontrainte du tronçon de sollicitation 17 de la fibre optique de détection 15. Un effort élastique dépendant de la raideur de la lame 14 s'applique sur le tronçon de sollicitation 17 de la fibre optique de détection 15 par compression entre les surfaces de pincement 16, 18. Cet effort de précontrainte peut en outre être réglé à une valeur désirée en modifiant l'épaisseur e de la cale 22, qui met en tension le ressort constitué par la lame 14, l'effort de précontrainte variant linéairement en fonction de cette épaisseur e. Cet effort de précontrainte, appliqué indépendamment de la force F₀ à mesurer, permet de faire fonctionner le capteur dans sa région de fonctionnement linéaire (voir figure 2).

La fibre optique de détection 17 est supportée par un organe porte-fibre 13 qui est posé sur la partie inférieure du support 12. L'organe porte-fibre 13 comprend ainsi une zone centrale 38 formant surface d'appui qui se place sur la surface supérieure de la partie inférieure du support 12, et deux flancs 40, 42 parallèles dont l'écartement correspond à la largeur du support 12. La longueur des flancs 40, 42 de l'organe porte-fibre 13 est supérieure à celle de la zone d'appui 38 de sorte que les extrémités des flancs 40, 42 délimitent une partie ouverte qui, lorsque l'organe porte-fibre est monté sur le support 12, reçoit la surface de pincement. 16 du support 12. Les extrémités des flancs 40, 42 comportent en outre des rebords 44, 46 en saillie vers l'intérieur et dont la surface inférieure coopère avec un épaulement respectif 48, 50, ces épaulements 48, 50 étant ménagés, sur le support 12, de part et d'autre de la surface de pincement 16. L'organe porte-fibre 13 peut ainsi coulisser le long du support 12 avec ses flancs 40, 42 coopérant avec les côtés du support 12 pour maintenir l'orientation du tronçon de sollicitation 17 de la fibre 15. Les flancs 40, 42 de l'organe porte-fibre 13 comportent chacun un orifice fileté 52, 54 destiné à recevoir des vis 56 qui solidarisent l'organe porte-fibre 13 et le support 12 portant la surface de pincement 16 lorsque le capteur est assemblé (figure 4).

L'organe porte-fibre 13 supporte la fibre optique de détection 15 dont un tronçon de sollicitation 17 est disposé perpendiculairement aux flancs 40, 42, c'est-à-dire, lorsque le capteur est assemblé (figure 4) dans une direction parallèle à l'axe de pivotement x-x′ du bras 10. Pour positionner la fibre optique de détection 15 avec son tronçon de sollicitation 17 convenablement orienté, on peut prévoir par exemple de la fixer à la partie supérieure de l'organe porte-fibre 13 par des points de colle 58 situés sur les rebords 44, 46 qui bordent la surface de pincement. 16.

A la figure 3, on voit que l'organe porte-fibre 13 supporte en outre une seconde fibre optique 60, dite fibre optique de référence. La fibre optique de référence 60 a avantageusement une constitution et des dimensions identiques à celles de la fibre optique de détection 15. La fibre optique de référence 60 est disposée sur l'organe porte-fibre 13 (par exemple par collage) de façon à ne pas être insérée entre les surfaces de pincement 16, 18, lorsque le capteur est assemblé.

Les fibres optiques de détection 15 et de référence 60 sont réunies en un câble unique 62 à l'intérieur d'une gaine commune. Pour monter les fibres optiques 15, 60 sur l'organe porte-fibre 13, on interrompt la gaine du câble 62 sur la longueur nécessaire, et on introduit le câble 62, près des parties interrompues de sa gaine dans des trous 64 portés respectivement par chaque flanc 40, 42 de l'organe porte-fibre 13. Une fente appropriée 66 permet de faire passer les zones libres des fibres optiques 15, 60 vers la partie supérieure de l'organe porte-fibre 13. On peut alors coller ces parties libres des fibres optiques 15, 60 sur la surface supérieure de l'organe porte-fibre 13, en faisant passer le tronçon de sollicitation 17 de la fibre optique de détection 15 entre les rebords 44, 46 de sorte que ce tronçon soit inséré entre les surfaces de pincement 16, 18, et en faisant passer la zone correspondante de la fibre optique de référence 60 en dehors de la région séparant les deux rebords 44, 46 de façon que cette zone soit située en dehors des surfaces de pincement 16, 18 lorsque le capteur est assemblé.

Dans la forme de réalisation de l'invention illustrée aux figures 3 et 4, la force à mesurer F₀ s'applique sur un étrier 70 articulé sur le bras 10 autour d'un axe y-y′ défini par une tige 72 traversant le bras 10 dans une direction parallèle à l'axe de pivotement x-x′ du bras 10 et au tronçon de sollicitation 17 de la fibre optique de détection 15. La tige d'articulation 72 est disposée en un endroit situé plus près de l'axe de pivotement x-x′ du bras 10 que du tronçon de sollicitation 17 de la fibre optique de détection 15. Cette tige 72 recevant l'étrier 70 sur lequel s'applique la force F₀ est située dans le plan de la lame 14 et les surfaces de pincement 16, 18 sont situées sensiblement dans ce plan. Ainsi, la force mesurée sera toujours la composante F₀ perpendiculaire à ce plan.

L'étrier 70 est monté sur la tige d'articulation 72 avec des roulements à billes 74 de chaque côté du bras 10 pour assurer une libre rotation de l'étrier 70 autour de la tige 72.

Pour mettre en place le capteur, le support 12 comporte, à sa partie inférieure, une nervure 76 par exemple en forme de queue d'aronde, qui s'étend parallèlement à la tige 72 et, relativement à l'axe de pivotement x-x′ du bras 10, au droit de la tige 72, de façon que la force de réaction s'exerçant sur le support. pour équilibrer la force à mesurer F₀ s'exerce avec le même bras de levier que celle-ci relativement à l'axe de pivotement x-x′ du bras 10, ce qui évite l'apparition de couples indésirables.

Pour faire fonctionner le capteur ci-dessus décrit, une source de lumière, raccordée par des moyens appropriés à une extrémité de chaque fibre optique 15, 60, émet un signal lumineux qui se propage le long des fibres optiques 15, 60. L'application de la force à mesurer F₀ entraîne une déformation du tronçon de sollicitation de la fibre optique 15 par microcourbures, ce qui provoque une atténuation du signal lumineux dans la fibre optique de détection 15. Un détecteur de lumière respectif est raccordé à l'autre extrémité de chaque fibre optique 15, 60. Et, en comparant l'intensité lumineuse des signaux propagés le long des deux fibres optiques 15, 60, on obtient une information représentative de l'effort appliqué F₀.

Par une analyse dynamique des forces s'appliquant sur le bras 10, on peut montrer que la force de réaction F₁ exercée par la fibre optique 15 sur la surface de pincement 18 solidaire du bras 10, est sensiblement égale à l'effort mesuré F₀ multiplié par le coefficient (b-a/2)/(c-a/2), où (voir figure 5):
a représente la longueur de la lame élastique 14 mesurée le long du bras 10;
b représente la distance séparant le point d'application de la force à mesurer F₀ (c'est-à-dire la tige 72) et l'extrémité de la lame 14 adjacente au support 12; et
c représente la distance séparant le point d'application de la force de réaction F₁ de la fibre optique de détection 15 (c'est-à-dire le tronçon de sollicitation 17) et l'extrémité de la lame 14 adjacente au support 12.

La force de réaction F₁ est l'effort de compression appliqué au tronçon de sollicitation 17 de la fibre optique 15 par les surfaces de pincement 16, 18. Sachant que cette force F₁ ne doit pas être trop importante pour éviter d'endommager la fibre optique 15, et pour que le capteur fonctionne en régime linéaire, on peut choisir, lors de la construction du capteur, le rapport (b-a/2)/(c-a/2) de façon à régler la gamme de cette force F₁ en fonction de la gamme d'effort F₀ à mesurer. Ainsi, si les forces F₀ à mesurer sont relativement importantes, on effectuera une démultiplication comme illustré aux figures 3 à 5, en réglant le rapport (b-a/2)/(c-a/2), tandis que, si les forces F₀ à mesurer sont relativement faibles, on pourra au contraire effectuer une multiplication comme on le décrira plus loin en référence à la figure 6.

L'axe de pivotement x-x′ du bras 10 est situé sensiblement au milieu de la longueur de la lame élastique 14, comme le montre la formule ci-dessus. Dans le dispositif suivant l'invention, on peut par ailleurs régler la sensibilité de la mesure en faisant varier le rapport des distances entre, d'une part, la distance c-a/2 séparant l'axe de pivotement- x-x′ du bras 10 et le tronçon de sollicitation 17 de la fibre optique de détection 15 et, d'autre part, la distance b-a/2 séparant l'axe de pivotement x-x′ du bras 10 et la tige 72 où s'applique la force F₀ à mesurer. Pour cela, on peut faire coulisser l'organe porte-fibre 13 le long du support 12, ce qui rapproche ou éloigne le tronçon de sollicitation 17 de la fibre optique 15 de l'axe de pivotement x-x′ et modifie donc le paramètre c. On fige alors ce réglage en serrant les vis 56 qui maintiennent l'organe porte-fibre 13 en position sur le support 12.

Par ailleurs, pour faire fonctionner le dispositif dans un régime de réponse linéaire (région 2 à la figure 2), on peut choisir une épaisseur e de la cale 22 variable, étant donné que, dans l'exemple représenté, plus cette épaisseur e est importante, plus l'effort de précontrainte exercé sur la fibre optique 15 pour décaler l'abscisse de l'origine des mesures est faible.

Le montage de l'étrier 70 d'application de la force à mesurer F₀ à l'aide de roulements à billes 74 disposés autour de la tige 72 permet, de façon avantageuse, d'obtenir une liberté de rotation de l'étrier 70 qui évite que des couples s'exerçant sur l'étrier 70 soient transmis au bras 10 lors de l'application de la force F₀. En outre, comme la tige 72 est située sensiblement dans le même plan que la lame 14, les surfaces de pincement 16, 18 étant situées sensiblement dans ce plan, la force F₀ mesurée sera toujours la composante perpendiculaire à ce plan.

Il est particulièrement avantageux, comme représenté aux figures 3 et 4, que le support 12, la lame 14 et au moins une partie du bras 10 forment un corps monobloc, par exemple réalisé à partir d'un bloc usiné, ce qui garantit une bonne stabilité mécanique du dispositif et une mesure sensiblement indépendante de la température de fonctionnement.

Pour une mesure par microcourbures, la fibre optique de détection 15 est de préférence une fibre optique multimode à gradient d'indice, ayant une gaine dure (une couche de 30 microns en aluminium ou une couche de 10 microns d'un plastique dur) pour éviter un fluage, et par conséquent une dérive du zéro de la mesure. Il est bien entendu possible de former plusieurs tronçons de sollicitation de la fibre optique de détection 15 s'étendant entre les surfaces de pincement 16, 18, en faisant passer plusieurs fois cette fibre optique de détection 15 entre les rebords 44, 46, cette disposition étant préférée lorsque le capteur travaille en régime linéaire car elle permet de répartir davantage les efforts ponctuels exercés sur la fibre optique de détection. On notera en outre que, bien que cela soit préféré, dans le cadre de la présente invention, le tronçon de sollicitation 17 de la fibre optique 15 n'est pas nécessairement parallèle à l'axe de pivotement x-x′ du bras 10.

L'utilisation d'une fibre optique de référence 60 en parallèle à la fibre optique de détection 15, mais en dehors des surfaces de pincement 16, 18 permet, par comparaison des signaux lumineux relatifs aux deux fibres optiques 15, 60, de s'affranchir des sources d'atténuation de la propagation autres que le pincement de la fibre optique de détection 15 entre les surfaces de pincement 16, 18. Notamment, on peut ainsi supprimer l'effet de l'atténuation lumineuse venant par exemple de courbures de la fibre dans une zone distincte de la zone du capteur et également de supprimer les variations des signaux mesurés en fonction des températures rencontrées le long de la fibre. Une fibre optique de silice, constituant en elle-même un excellent ressort, avec un module d'Young élevé et une hystérésis faible, la contre-réaction F₁ par la fibre optique 15 sera très reproductible et le capteur délivrera donc des informations de mesure très fiables.

Avec ce dispositif selon l'invention, même si la gaine de la fibre optique de détection 15 subit un tassement au cours du temps, il ne se produit pas de dérive du zéro de la mesure, contrairement au cas d'un capteur de déplacement de la technique antérieure. En effet, la force à mesurer F₀ et l'effort de précontrainte sont transmis au tronçon de sollicitation 17 sous forme d'une force sans transformation de celle-ci en un déplacement, ce qui mettrait en jeu les dimensions précises et les propriétés élastiques des pièces mécaniques.

### Exemple 1

Pour illustrer la forme de réalisation du capteur décrite en référence aux figures 3 et 4, on donne ci-dessous un exemple complet du dimensionnement d'un tel capteur, cet exemple n'étant bien entendu nullement limitatif quant à la portée de la présente invention.
1. Dynamique de mesure du capteur (recherchée) = 1 daN à 10 daN.
2. Fibre choisie:
   Fabricant: Corning - Référence 201.
   Fibre à gradient d'indice.
   Diamètre du coeur=85 microns, diamètre de la gaine = 125 microns.
   Ouverture numérique = 0,26.
   Gaine en acrylate.
   Distance de couplage de modes : calculée = 1,557 mm (donnant, selon le US-A-4 572 950, la périodicité de la modulation des surfaces de pincement 16, 18).
   Distance de couplage de modes mesurée = 1,58 mm
   Sensibilité = 0,023 dB/g.
   Gamme linéaire (avec 20 dents) = 100 à 900 g (Région 2 à la figure 2).
   Raideur de la fibre (avec 20 dents) = 100 daN/mm.
3. Facteur de démultiplication (recherché) F₀/F₁ = 10/0,9 = 11,1 = (c-a/2)/(b-a/2)
4. Construction du capteur :
   Dimensions: a = 1 mm, b = 5 mm, c = 50 mm.
   Point d'appui de la charge = 4,5 mm (du centre de la lame).
   Facteur de démultiplication = 49,5/4,5 = 11.
   Le porte-filtre 13 pouvait se déplacer de 5 mm le long du support 12. Ceci équivaut à modifier le facteur de multiplication de 10% et, donc, à faire varier la sensibilité de 10%.
5. Lame 14 :
   Dimensions de la lame: Epaisseur = 0,8 mm; largeur = 20 mm.
   Raideur de la lame = 6000 daN/mm.
   Raideur de la lame vue du point d'application de la force = 6000/4,5² = 296 daN/mm.
   Il faut remarquer que la raideur de la lame 14 est grande, donc la fréquence de résonance mécanique du corps monobloc est élevée. Mais, vue du point d'application de la force F₀ appliquée au capteur, la raideur est faible et, donc, l'effort "absorbé" par la lame 14 est aussi faible (moins de 5% de l'effort total).
6. Cale 22:
   Réglage de l'épaisseur de la cale 22 (déplacement du zéro) = 11/0,296 = 37,2 microns/kg (d'effort F₀)
7. Fréquence de résonance
   Masse typique supportée par le capteur = 1 kg.
   Fréquence de résonance:
   Calculée = 721 Hz (flexion), 830 Hz (torsion).
   Mesurée = 607 Hz, 924 Hz.

Bien entendu, de nombreuses variantes restant dans le cadre de l'invention peuvent être apportées au mode de réalisation décrit précédemment.

Une variante possible est illustrée à la figure 6. Dans cette variante, adaptée pour la mesure d'une force F₀ dans une gamme relativement basse, le bras 110 repose sur un support 112 par un appui de type couteau le long d'une arête 114 du support 112. La force F₀ à mesurer s'exerce sur un corps 170 qui s'appuie sur le bras 110 également par un appui de type couteau le long d'une arête 172 portée par le corps 170. Dans une zone médiane du bras 110, entre le corps 170 et le support 112, s'étend la fibre optique de détection 115 dont un tronçon de sollicitation 117 est inséré entre deux surfaces de pincement planes 116, 118.On assure ainsi une multiplication recherchée de l'effort F₀ pour appliquer un effort de pincement amplifié sur la fibre optique 115. Une surface de pincement 118 est solidaire du bras 110 et la seconde surface de pincement 116 est solidaire d'un bloc 119 distinct du bras 110 et disposé du côté opposé au support 112 et au corps 170 relativement au bras 110. Le bras 110 peut pivoter autour de l'arête 114 du support 112, et la sensibilité de ce capteur peut être réglée en modifiant les positions relatives du corps 170 et du support 112. L'arête 114 du support 112, l'arête 172 du corps 170 et la zone de transmission d'effort 116, 118 sont situées dans un même plan P. Pour appliquer l'effort de précontrainte, destiné au réglage du zéro de la mesure, sur la fibre optique de détection 115, on dispose une vis 180 traversant un trou 182 prévu dans le bras 110 perpendiculairement aux surfaces de pincement 116, 118 et venant en prise dans un trou fileté 184 prévu dans le bloc 119. La tête de la vis 180 s'applique à une extrémité d'un ressort hélicoïdal 186 entourant la tige de la vis 180, dont l'autre extrémité s'appuie sur une rondelle 188 disposée devant le trou 182 du bras 110, du côté de la tête de la vis 180. Le ressort 186 est disposé pour appliquer une contrainte de compression entre les surfaces de pincement 116 et 118, l'amplitude de cette précontrainte pouvant être réglée en serrant ou en desserrant la vis 180.

Dans l'exemple illustré à la figure 6, le circuit optique de détection est agencé pour une mesure par polarimétrie avec un seul capteur. Un filtre polarisant 105 est associé à la source de lumière 104 pour que la lumière émise dans la fibre 115 ait une polarité p donnée. La fibre 115, dont le tronçon de sollicitation 117 est représenté en coupe à la figure 7, est une fibre monomode à coeur circulaire 150. Lorsqu'un effort de compression s'exerce entre les surfaces de pincement planes 116, 118, le tronçon de sollicitation 117 s'ovalise légèrement comme illustré (de façon exagérée) à la figure 8. Le coeur 150 de la fibre 115 s'aplatit légèrement et il en résulte urne rotation de la polarisation p de la lumière propagée. La mesure du degré de rotation de la polarisation p donne donc une information représentative de l'effort mesuré par l'agencement de la figure 6. Pour effectuer cette mesure, l'extrémité de la fibre optique 115 se raccorde à l'entrée d'un coupleur en Y 108 dont les sorties sont reliées respectivement à un filtre polarisant 107a, 107b et à un photodétecteur 106a, 106b qui permettent d'analyser la polarisation de la lumière reçue. Le filtre 107a isole la composante parallèle à la polarisation initiale donnée par le filtre 105 et le filtre 107b isole la composante perpendiculaire à celle-ci et à la direction de propagation. La comparaison des signaux des détecteurs 106a, 106b indique donc le degré de rotation de la polarisation p, représentatif de la force Fₒ mesurée par le capteur.

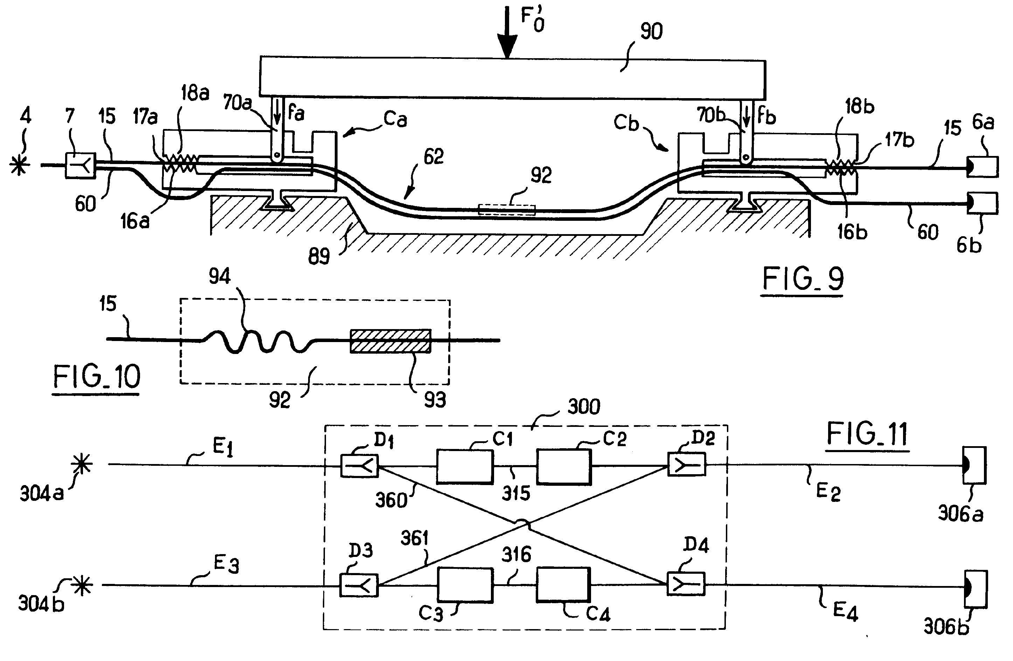

La figure 9 illustre un circuit optique utilisé selon la présente invention pour réaliser un dispositif de mesure comprenant plusieurs capteurs par microcourbures du type illustré aux figures 3 à 5. On notera qu'un circuit optique analogue peut être construit avec des capteurs par polarimétrie du type décrit en référence aux figures 6 à 8 ou avec d'autres capteurs à fibre optique.

Deux capteurs Cₐ, C_{b} fixés sur un socle commun 89 sont montés en série sur la même fibre optique de détection 15. Deux tronçons de sollicitation 17a, 17b de la fibre 15 sont disposés dans les zones de transmission d'effort 16a, 18a, et 16b, 18b des capteurs Cₐ, C_{b}, qui exercent des contraintes sur ces tronçons de sollicitation 17a, 17b en réponse à l'application d'efforts respectifs fₐ, f_{b} sur les capteurs Cₐ, C_{b} par l'intermédiaire de leurs étriers d'application de force 70a, 70b. Les efforts fₐ, f_{b} sont des fractions de la force totale à mesurer Fₒ′ qui s'exerce une barre de forme allongée 90 dont les extrémités sont fixées respectivement aux deux étriers 70a, 70b. La force Fₒ′ a son point d'application en une position indéterminée sur la barre 90, de sorte que les proportions de la force Fₒ′ qui correspondent aux fractions fₐ, f_{b} ne sont pas connues a priori.

La fibre optique de détection 15 est réunie avec une fibre optique de référence 60 en un câble 62, sauf au voisinage des zones de transmission d'effort 16a, 18a et 16b, 18b des capteurs Cₐ, C_{b}. A une de leurs extrémités, les fibres 15, 60 sont raccordées aux deux sorties d'un coupleur en Y 7 dont l'entrée est reliée à la source de lumière 4. L'autre extrémité de chacune des fibres 15, 60 se raccorde à un photodétecteur respectif 6a, 6b mesurant l'intensité lumineuse émise par la source 4 et transmise le long du circuit via les capteurs Cₐ, C_{b}.

Chacun des capteurs Cₐ, C_{b} comporte des moyens de précontrainte réglable tels que ceux décrits en référence aux figures 3 et 4 de façon à les faire opérer dans leur région de fonctionnement linéaire et des moyens de réglage de sensibilité tels que ceux décrits en référence aux figures 3 et 4 de façon à ce qu'on puisse régler la sensibilité des capteurs Cₐ, C_{b} sur une valeur sensiblement égale. Dans ces conditions, on obtient, en comparant les intensités mesurées par les capteurs Cₐ, C_{b}, une réponse sensiblement proportionnelle à l'effort total F′₀ = fₐ + f_{b}.

Dans une réalisation simplifiée, il est possible de supprimer la fibre optique de référence 60. Dans ce cas, il est préférable de pouvoir évaluer les pertes par atténuation hors des zones de transmission d'effort 16a, 18a et 16b, 18b des capteurs Cₐ, C_{b} de façon à en tenir compte dans l'analyse de l'atténuation totale.

Le montage illustré à la figure 9 effectue une intégration optique des fractions fₐ, f_{b} de la force F₀′ sans qu'il y ait besoin de mesurer ces fractions indépendamment l'une de l'autre. Le dispositif ne nécessite donc qu'un nombre réduit de composants optiques (fibres, connecteurs) ce qui réduit sensiblement son coût de fabrication. Le petit nombre de connecteurs minimise en outre les atténuations parasites qu'ils occasionnent.

### EXEMPLE 2

On a réalisé deux capteurs Cₐ, C_{b} tels que celui décrit dans l'exemple 1 en réglant leur précontrainte pour qu'ils fonctionnent dans leur régime de réponse linéaire. On a réglé la sensibilité du capteur Cₐ à une valeur de 1,35 décibel d'atténuation par kilogramme d'effort fₐ appliqué et celle du capteur C_{b} à une valeur voisine de 1,45 décibel par kilogramme d'effort f_{b}, cette différence servant à démontrer que leur montage en série fournit des résultats satisfaisants même si les sensibilités ne sont pas strictement égales. Avec ces deux capteurs, on a réalisé un montage tel que celui de la figure 9, avec une barre 90 ayant une longueur de 612 mm. Les étriers 70a, 70b des capteurs Cₐ, C_{b} étaient fixés aux deux extrémités de la barre 90 et le point d'application de la force Fₒ′ prenait différentes positions dans une zone de 400 mm de long autour du centre de la barre 90. La force Fₒ′ prenait différentes valeurs entre 2 et 10 kilogrammes. Les valeurs ci-dessus sont typiques d'une application du dispositif pour mesurer l'effort de contact Fₒ′ entre les bandes de frottement d'un pantographe pour motrice ferroviaire et une ligne caténaire. On a fait les observations suivantes :
(i) La sensibilité des deux capteurs en série est peu modifiée (1,28 dB/kg).
(ii) La linéarité de la réponse est améliorée. Les capteurs Cₐ, C_{b} individuels présentent un écart de linéarité de 1,02 dB entre 2 et 10 kg d'effort tandis que leur association en série présente un écart de linéarité de 0,525 dB sur la même gamme.
(iii) L'atténuation globale dépend faiblement de la position du point d'application de la force Fₒ′ le long de la barre 90. Une certaine variation existe dans la zone de 400 mm spécifiée mais elle reste inférieure à 8% dans tous les cas de charge testés. Cette variation peut encore être réduite en égalisant les sensibilités individuelles des capteurs Cₐ, C_{b} et en affinant le réglage des précontraintes.
(iv) Le montage en série n'augmente pas l'hystérésis du système (-0,15 dB à Fₒ = 7 kg).

Pour améliorer les performances du dispositif, la fibre optique de détection 15 peut comporter une zone de conditionnement 92 disposée entre deux capteurs Cₐ, C_{b} montés en série de façon à supprimer les modes supérieurs se propageant entre les capteurs. La lumière parvenant au premier capteur Cₐ est dans un état d'équilibre spectral vis-à-vis des caractéristiques optiques de la fibre 15. Après le passage à travers le premier capteur Cₐ, le spectre de la lumière est perturbé car le capteur Cₐ produit de modes optiques élevés. Ces modes élevés sont absorbés préférentiellement par la gaine de la fibre 15 mais il peut subsister, à l'entrée du second capteur C_{b}, des modes élevés qui présentent l'inconvénient de modifier la réponse du second capteur C_{b} par rapport à celle du premier capteur Cₐ et donc d'altérer le résultat de la mesure.

En aménageant une zone de conditionnement 92 sur la fibre 15 entre les deux capteurs Cₐ, C_{b}, on élimine ces modes élevés, ce qui améliore la fiabilité de la mesure en reproduisant, à l'entrée du second capteur C_{b} un spectre de lumière correspondant à l'équilibre de propagation dans la fibre optique 15. La zone de conditionnement 92 illustrée aux figures 9 et 10 peut comprendre un tronçon de la fibre 15 entouré par une gaine 93 absorbant les modes élevés ou par un autre milieu dont l'indice de réfraction est adapté pour absorber ces modes élevés ("mode stripper"). En amont de ce tronçon, la zone de conditionnement peut en outre comprendre un mélangeur de modes 94.

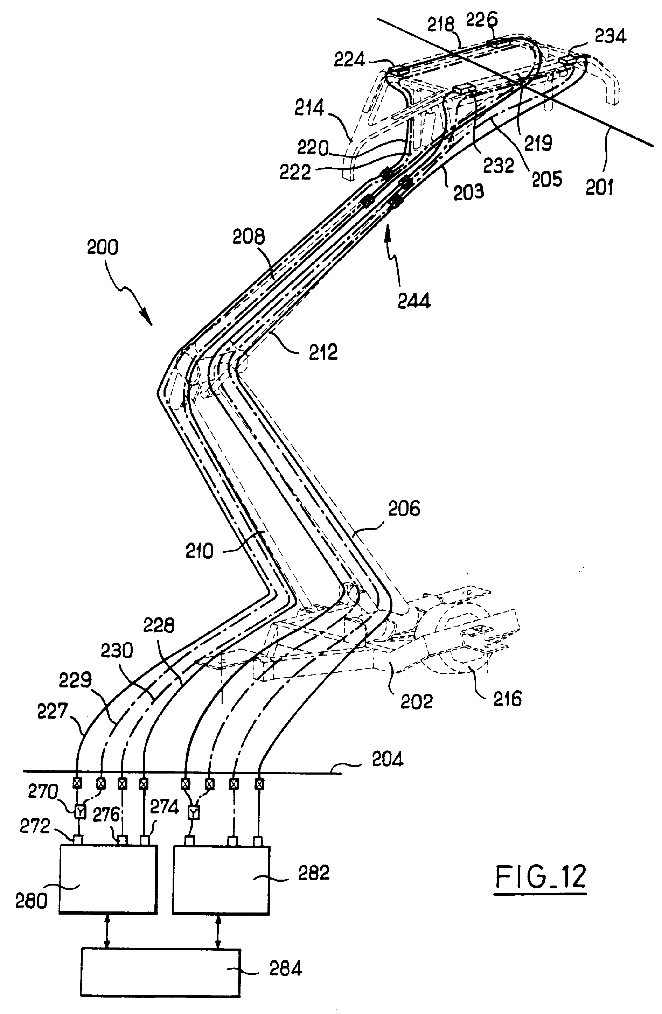

Un autre circuit optique selon l'invention permettant de réaliser l'intégration de fractions d'effort mesurées est représenté schématiquement à la figure 11. Ce circuit est monté entre deux sources 304a, 304b et deux détecteurs 306a, 306b de lumière. La première source 304a émet des impulsions lumineuses à une première fréquence de répétition f₁ dans une fibre optique E₁ qui achemine la lumière vers la zone de mesure 300 où la fibre E₁ se raccorde à l'entrée d'un coupleur en Y D₁. Aux deux sorties du coupleur en Y D₁ se raccordent une première fibre optique de détection 315 et une première fibre optique de référence 360. Deux capteurs C₁, C₂ sont montés sur des tronçons de sollicitation de la première fibre optique de détection 315 et la première fibre optique de référence 360 passe en dehors des capteurs. La seconde source 304b émet des impulsions lumineuses à une seconde fréquence de répétition f₂ dans une fibre optique E₃ qui achemine la lumière vers la zone de mesure 300 où la fibre E₃ se raccorde à l'entrée d'un coupleur en Y D₃. Aux deux sorties du coupleur en Y D₃ se raccordent une seconde fibre optique de détection 316 et une seconde fibre optique de référence 361. Deux autres capteurs C₃, C₄ sont montés sur des tronçons de sollicitation de la seconde fibre optique de détection 316 et la seconde fibre optique de référence 361 passe en dehors des capteurs. Les autres extrémités de la première fibre optique de détection 315 et de la seconde fibre optique de référence 361 se raccordent aux deux entrées d'un coupleur en Y D₂. Une fibre optique E₂ se raccorde à la sortie du coupleur en Y D₂ pour acheminer la lumière transmise par les fibres 315 et 361 hors de la zone de mesure 300 jusqu'au premier photodétecteur 306a. Les autres extrémités de la seconde fibre optique de détection 316 et de la première fibre optique de référence 360 se raccordent aux deux entrées d'un coupleur en Y D₄. Une fibre optique E₄ se raccorde à la sortie du coupleur en Y D₄ pour acheminer la lumière transmise par les fibres 316 et 360 hors de la zone de mesure 300 jusqu'au second photodétecteur 306b.

En choisissant des fréquences d'émission f₁, f₂ différentes pour les deux sources 304a, 304b, on peut discriminer, dans les signaux reçus par chaque détecteur 306a, 306b, entre la lumière transmise le long des fibres optiques de détection 315, 316 et des fibres optiques de référence 360, 361.

Ainsi, le détecteur 306a permet de déterminer l'atténuation A₁ le long du trajet E₁/D₁/315/D₂/E₂ et l'atténuation A₂ le long du trajet E₃/D₃/361/D₂/E₂ et le détecteur 306b permet de déterminer l'atténuation A₃ le long du trajet E₁/D₁/360/D₄/E₄ et l'atténuation A₄ le long du trajet E₃/D₃/316/D₄/E₄.

On constate qu'en calculant simplement la différence A = (A₁ + A₄) - (A₂ + A₃), on obtient directement l'atténuation totale par les quatre capteurs C₁, C₂, C₃, C₄ lorsque les fibres optiques de détection 315, 316 et de référence 360, 361 ont la même constitution et les mêmes dimensions.

Par conséquent, le montage ci-dessus permet de calculer l'effort total réparti sur les quatre capteurs C₁, C₂, C₃, C₄ et d'éliminer l'effet des pertes indésirables dans les fibres optiques d'acheminement E₁, E₂, E₃, E₄ et dans les coupleurs D₁, D₂, D₃, D₄. Si d'autres connecteurs sont montés sur les fibres d'acheminement E₁, E₂, E₃, E₄, ils auront également sur le résultat de la mesure un effet compensé intrinsèquement par le circuit optique.

On notera que le montage illustré à la figure 11 peut être utilisé avec un seul capteur sur chaque fibre optique de détection 315, 316. Dans ce cas, le circuit optique réalise simplement la sommation des fractions d'effort appliquées à deux capteurs.

On va maintenant décrire l'installation de dispositifs de mesure conformes à l'invention dans un pantographe pour motrice ferroviaire.

De façon classique, le pantographe 200 repose, par un socle électriquement isolé 202 sur la toiture 204 de la motrice. Une structure tubulaire déployable relie le socle 202 à un archet 214 portant des bandes de frottement. 218, 219 qui, en service, sont appliquées contre la ligne caténaire 201 pour assurer le captage du courant destiné aux organes moteurs de la motrice ferroviaire. La structure tubulaire comprend un bras inférieur 206 articule sur le socle 202, un bras supérieur 208 articulé sur l'extrémité du bras inférieur 206 et dont l'extrémité supérieure supporte l'archet 214. Des barres complémentaires 210, 212 assurent le maintien en position de la structure tubulaire du pantographe 200, cette structure tubulaire pouvant se déployer sous l'action d'un coussin pneumatique 216 actionné par une unité pneumatique non représentée qui applique une pression déterminée dans le coussin 216 pour exercer un effort de contact réglable entre les bandes de frottement 218, 219 et la ligne caténaire 201.

Dans la force de réalisation représentée à la figure 12, l'archet 214 supporte deux bandes de frottement 218, 219. L'effort de contact s'exerçant entre le fil caténaire 201 et la première bande de frottement 218 est mesuré par un dispositif de mesure conforme à l'invention comprenant une fibre optique de détection 220 et une fibre optique de référence 222 réunies en un câble 221 et deux capteurs 224, 226 montés en série sur la fibre de détection 220 et interposés entre la bande de frottement 218 et la branche 215 de l'archet 214 supportant cette bande de frottement 218. De même, l'effort de contact s'exerçant entre le fil caténaire 201 et la seconde bande de frottement 219 est mesuré par un dispositif de mesure conforme à l'invention comprenant une fibre optique de détection 203 et une fibre optique de référence 205 réunies en un câble 223 et deux capteurs 232, 234 montés en série sur la fibre de détection 203 et interposés entre la bande de frottement 219 et la branche 217 de l'archet 214 supportant cette bande de frottement 219. Pour éviter de surcharger la figure 12, on n'a pas affecté de référence numérique aux différentes fibres optiques utiles à la mesure de la force de contact entre le fil caténaire 201 et la seconde bande de frottement 219 du pantographe 200. On comprendra cependant que ce circuit optique est identique à celui relatif à la bande de frottement 218 qu'on va décrire ci-dessous en détail.

En outre, puisque le dispositif de mesure conforme à l'invention a été décrit en détail en référence aux figures 1 à 11, on va simplement décrire son montage pour l'utilisation préférée dans le pantographe 200 sans qu'il soit nécessaire de détailler de nouveau la structure des capteurs (bras, articulations, support, surfaces de pincement etc...) ou les circuits optiques entre les capteurs.

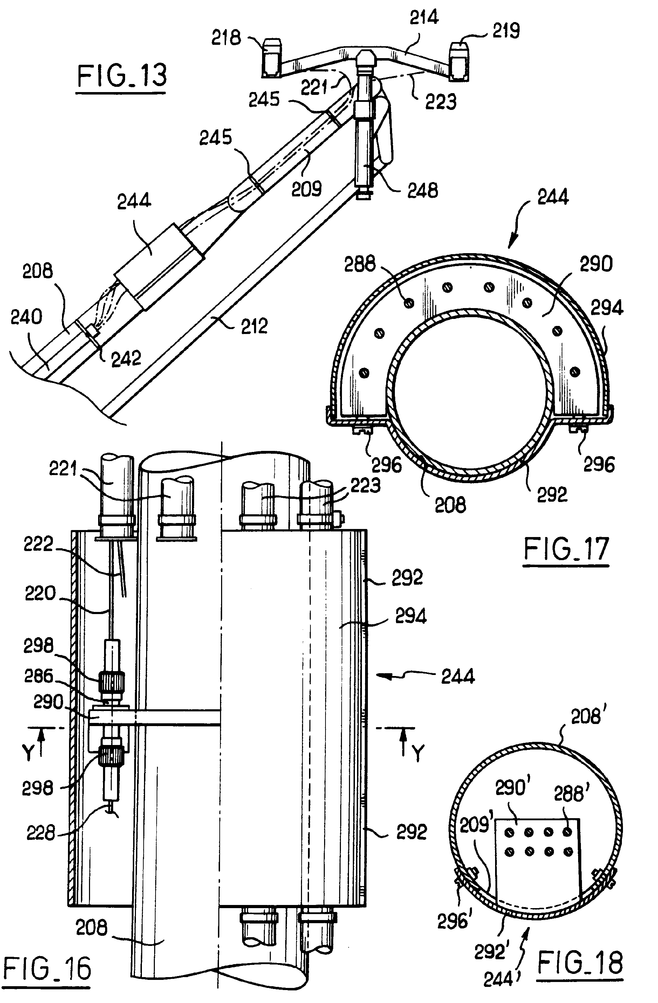

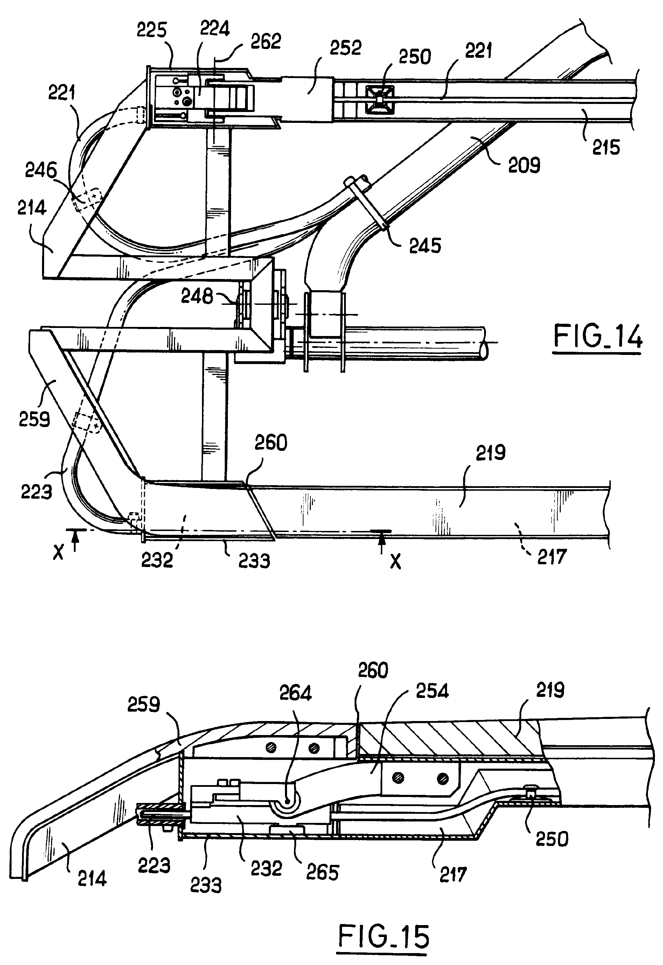

La figure 13 représente, en élévation, la partie haute d'un pantographe qui, conformément à l'invention incorpore des capteurs de mesure d'effort. Un faisceau de fibres optiques 240 est maintenu contre la structure tubulaire du pantographe 200 par des attaches 242. Dans la partie haute du bras supérieur 208 est disposée une unité de connexion optique 244 permettant de relier les fibres optiques comprises dans le faisceau 240 aux fibres optiques de détection 203, 220 et de référence 205, 222 utilisées pour mesurer l'effort de contact entre la ligne caténaire 201 et l'archet 214. Un premier câble 221 comprenant les fibres optiques de détection 220 et de référence 222 relatives à la première bande de frottement 218 est monté à ses deux extrémités sur l'unité de connexion optique 244, et est amené au voisinage de la bande de frottement 218 pour mesurer l'effort que celle-ci supporte. Pour guider le câble 221, on a prévu des attaches 245, 246 portées respectivement par un support d'archet en forme de Y 209 et par l'archet 214 (voir figure 14).

L'archet 214, qui est monté sur son support 209 par l'intermédiaire de boîtes de suspension 248 comprend deux branches parallèles 215, 217 s'étendant sous les bandes de frottement 218, 219 dans une direction transversale à la ligne de courant 201. A la vue de dessus de la figure 14, on a représenté la bande de frottement 219 montée sur sa branche d'archet 217, mais on n'a pas représenté la bande de frottement 218 pour montrer la structure de sa branche d'archet respective 215. Les branches d'archet 215, 217 ont la forme de profilés en U, dont la partie intérieure sert au passage des câbles de fibres optiques 221, 223, fixés à l'intérieur de ces profilés par des attaches 250. Aux deux extrémités de chaque branche 215, 217 sont montés des blocs capteurs, respectivement 224, 226 et 232, 234. Ces capteurs sont placés dans des boîtes 225, 233 portées par les extrémités des branches 215, 217 (voir figures 14 et 15). Pour le montage des bandes de frottement 218, 219 sur leurs branches respectives 215, 217, sont prévus des étriers 252, 254 fixés chacun à une extrémité de la bande 218, 219 et articulés suivant un axe 262, 264 sur le bras du capteur respectif 224, 232. Ainsi, l'effort de contact s'exerçant entre les bandes de frottement 218, 219 et la ligne caténaire 201 est transmis intégralement aux bras des capteurs 224, 226, 232, 234 par l'intermédiaire des étriers d'application de force 252, 254. Comme on l'a décrit en référence aux figures 3 et 4, l'axe d'articulation 262, 264 de l'étrier d'application de force 252, 254 est situé, sur le bras du capteur respectif 224, 232, plus près de l'axe de pivotement dudit bras que du tronçon de sollicitation respectif de la fibre optique de détection compris entre les surfaces de pincement du capteur. Par ailleurs, le capteur 232 est fixé dans son boîtier 233 à la base de son support, en un endroit 265 situé au droit de l'axe de pivotement 264. La surface de pincement solidaire du bras du capteur 232 est reliée à la bande de frottement 219 et la surface de pincement solidaire du support du capteur 232 est reliée à la branche 217 de l'archet 214.

On peut voir aux figures 14 et 15 que les bandes de frottement 219 ont des prolongements latéraux indépendants 259 solidaires de l'archet 214. Ces prolongements latéraux 259 évitent la présence d'un décrochement dans la zone 260 où s'interrompt la bande de frottement 219, qui doit être fixée sur l'archet 214 uniquement par les étriers d'application de force 254 s'appuyant sur les capteurs 232. Ces zones d'interruption 260 s'étendent obliquement par rapport à la direction des bandes de frottement pour éviter que le fil caténaire 201 puisse s'y coincer (voir figure 14).

Le circuit optique de mesure de l'effort entre les bandes de frottement 218, 219 et la ligne caténaire 201 est illustré aux figures 12, 16 et. 17. Les deux extrémités de la fibre optique de détection 220 relatives à la bande de frottement 218 sont reliées, dans l'unité de connexion optique 244, à deux fibres optiques d'acheminement 227, 228 faisant partie du faisceau 240. Les deux extrémités de la fibre optique de référence 222 relative à la bande de frottement 218 sont reliées, dans l'unité de connexion optique 244, à deux autres fibres optiques d'acheminement 229, 230 du faisceau 240. A l'extrémité du faisceau 240 du côté de la motrice, les fibres optiques 227, 229 sont reliées à la sortie d'un coupleur en Y 270 dont l'entrée est reliée à une source de lumière 272, telle qu'une diode laser. Les extrémités des fibres optiques 228, 230 du faisceau 240 sont reliées respectivement à des photodétecteurs 274, 276 qui mesurent les intensités lumineuses reçues. Ainsi, la lumière émise par la diode laser 272 suit une voie de détection formée par la fibre optique 227, la fibre optique de détection 220 et la fibre optique 228 et aboutissant au photodétecteur 274, et une voie de référence formée par la fibre optique 229, la fibre optique de référence 222, et la fibre optique 230, et aboutissant au photodétecteur 276. Une unité de traitement de signal 280 interprète alors l'atténuation lumineuse des signaux reçus par les photodétecteurs 274, 276 et en déduit l'effort subi par la bande de frottement 218 et mesuré par les capteurs 224, 226. Pour faciliter cette interprétation, on prévoit de préférence une constitution et des dimensions identiques pour les fibres optiques 227, 228, 229, 230 contenues dans le faisceau 240 qui assure l'isolement électrique vis-à-vis de la haute tension présente dans le fil caténaire 201, ainsi qu'une constitution et des dimensions identiques pour la fibre optique de détection 220 et la fibre optique de référence 222.

Un circuit optique analogue est prévu pour la mesure de l'effort subi par la bande de frottement 219, cet effort étant déterminé par une seconde unité de traitement de signal 282. La mesure des efforts de contact entre les bandes de frottement 218, 219 et le fil caténaire 201 peut alors être exploitée par un dispositif de commande 284 relié aux unités de traitement de signal 280, 282, par exemple pour commander le pression pneumatique appliquée dans le coussin 216 de façon à régler par asservissement rétroactif la valeur de l'effort de contact entre le pantographe 200 et la ligne caténaire 201. Un tel asservissement est par exemple décrit dans le FR-A-2 646 381 (EP-A-395 504) au nom de la demanderesse.

On notera que l'intégration des fractions d'effort mesurées par le circuit optique rend la mesure de l'effort de contact total sensiblement indépendante de la position du fil caténaire 201 le long des bandes 218, 219, qui définit les points d'application de l'effort de contact sur les bandes 218, 219.

L'unité de connexion optique 244 comporte avantageusement une série de huit connecteurs 286 répartis autour de la périphérie d'une section du bras supérieur 208 de la structure tubulaire du pantographe 200 (voir figures 16 et 17). Chaque connecteur 286 est monté dans un orifice 288 porté par un bloc de connexion 290 monté autour du bras supérieur 208 et maintenu contre le bras supérieur 208 par un boîtier constitué de deux demi-coquilles 292, 294 assemblées par des vis 296. Chaque face du connecteur 286 comprend une bague 298 permettant le montage de l'extrémité de fibre 220, 228 correspondante. L'unité de connexion optique 244 telle que représentée aux figures 11 et 12 a avantageusement un encombrement et un poids réduits, ce qui lui évite de gêner l'aérodynamisme du pantographe 200.

Bien entendu, on comprendra que, dans le cadre de l'invention, d'autres montages des capteurs à fibre optique sur un pantographe sont possibles.

Par exemple, on peut avantageusement faire passer le faisceau de fibres optiques 240 à l'intérieur des tubes constituant le cadre du pantographe. Au niveau des articulations de la structure tubulaire, on peut alors faire passer le faisceau 240 à l'extérieur des tubes pour éviter que les mouvements du pantographe endommagent les fibres optiques. Dans cette variante, l'unité de connexion optique 244′ peut avoir la structure illustrée à la figure 18 qui montre une vue en coupe du bras supérieur 208′ au droit de l'unité 244′. Le bras 208′ présente une ouverture 209′ couverte par un capot 292′ fixé par des vis 296′. Un bloc de connexion 290′ solidaire du capot 292′ est disposé à l'intérieur du bras 208′ pour supporter les connecteurs 286 montés dans des orifices 288 portés par le bloc de connexion 290′. Au dessus de l'unité de connexion 244′, les câbles à fibre optique passent de nouveau à l'extérieur de la structure tubulaire pour rejoindre l'archet 214.

Le dispositif de mesure monté sur le pantographe 200 comme illustré à la figure 12 permet de déterminer séparément la force de contact sur chacune des bandes de frottement 218, 219. Si on souhaite seulement connaître l'effort total entre le fil caténaire 201 et l'archet 214, on peut, dans une version simplifiée, faire passer dans l'archet 214 une fibre optique de détection unique sur laquelle les quatre capteurs 224, 226, 232, 234 seraient montés en série pour réaliser optiquement la sommation des efforts mesurés tout en minimisant le nombre de composants optiques utilisés.

Une autre solution faisant appel à un nombre restreint de fibres optiques consiste à utiliser le montage optique décrit en référence à la figure 11. Dans ce cas, la zone de mesure 300 correspond à l'archet du pantographe et les quatre fibres optiques d'acheminement E₁, E₂, E₃, E₄ sont disposées le long de la structure tubulaire 206, 208. Ce montage élimine avantageusement les atténuations parasites dans les fibres optiques d'acheminement.

## Revendications

1. Dispositif pour mesurer une force (F₀, F′₀) comprenant une fibre optique de détection (15; 115; 203, 220 ; 315, 316) dont les extrémités comportent des moyens de raccordement (7 ; 298 ; D₁, D₂, D₃, D₄) respectivement à une source de lumière (4 ; 104; 272 ; 304a, 304b) et à au moins un détecteur de lumière (6a ;106a, 106b ; 274 ; 306a, 306b), au moins un tronçon de sollicitation (17 ; 17a, 17b ;117) de la fibre optique de détection (15 ; 115 ; 203, 220 ; 315, 316) étant disposé dans une zone de transmission d'effort (16, 18; 16a, 18a, 16b, 18b ; 116, 118) adaptée pour exercer une contrainte sur le tronçon de sollicitation (17 ; 17a, 17b ; 117) de la fibre optique de détection (15; 115; 203, 220 ; 315, 316) en réponse à l'application de la force à mesurer (F₀ ; F′₀), caractérisé en ce qu'il comprend un bras (10; 110) articulé autour d'un axe de pivotement (x-x′; 114), en ce que des moyens (70; 70a, 70b ; 170; 252, 254) d'application de la force à mesurer (F₀, F′₀) sont montés sur le bras (10; 110) et en ce que la zone de transmission d'effort (16, 18 ; 16a, 18a, 16b, 18b ; 116, 118) est définie en partie par des moyens (18 ; 18a, 18b ; 118) solidaires du bras (10 ; 110).

2. Dispositif conforme à la revendication 1, caractérisé en ce que les moyens (70 ; 170 ; 252, 254) d'application de la force à mesurer (F₀) sont montés sur le bras (10 ; 110) de façon que les couples s'exerçant sur les moyens (70 ; 170 ; 252, 254) ne soient pas transmis au bras (10 ; 110).

3. Dispositif conforme à l'une des revendications 1 ou 2, caractérisé en ce que les moyens (70; 170; 252, 254) d'application de la force à mesurer (F₀) présentent une liberté de rotation par rapport au bras (10; 110) selon une direction (y-y′; 172 ; 262, 264) sensiblement parallèle à l'axe de pivotement (x-x′; 114) du bras (10 ; 110).

4. Dispositif conforme à la revendication 3, caractérisé en ce que la direction (y-y′ ; 172) selon laquelle les moyens (70 ; 170) d'application de la force à mesurer (F₀) présentent une liberté de rotation par rapport au bras (10 ; 110) et l'axe de pivotement (x-x′ ; 114) du bras (10 ; 110) définissent un plan (P), la zone de transmission d'effort (16, 18 ; 116, 118) étant disposée sensiblement dans ce plan (P).

5. Dispositif conforme à l'une des revendications 1 à 4, caractérisé en ce que le tronçon de sollicitation (17) de la fibre optique de détection (15) s'étend dans une direction sensiblement parallèle à l'axe de pivotement (x-x′) du bras (10).

6. Dispositif conforme à l'une des revendications 1 à 5, caractérisé en ce que la zone de transmission d'effort est définie par deux surfaces de pincement (16, 18 ; 116, 118) dont l'une (18 ; 118) est solidaire du bras (10 ; 110).

7. Dispositif conforme à l'une des revendications 1 à 6, caractérisé en ce que les moyens (70) d'application de la force à mesurer (F₀) sont disposés sur le bras (10) de façon que la force à mesurer (F₀) s'exerce sur le bras (10) plus près de l'axe de pivotement (x-x′) du bras (10) que de la zone de transmission d'effort (16, 18).

8. Dispositif conforme à l'une des revendications 1 à 6, caractérisé en ce que les moyens (170) d'application de la force à mesurer (F₀) sont disposes sur le bras (110) de façon que la force à mesurer (F₀) s'exerce sur le bras (110) plus loin de l'axe de pivotement (114) du bras (110) que de la zone de transmission d'effort (116, 118).

9. Dispositif conforme à l'urne des revendications 1 à 8, caractérisé en ce qu'il comprend des moyens de précontrainte (14; 186) pour exercer un effort de précontrainte sur le tronçon de sollicitation (17 ; 117) de la fibre optique de détection (15; 115) indépendamment de l'application de la force à mesurer (F₀).

10. Dispositif conforme à la revendication 9, caractérisé en ce qu'il comprend des moyens de réglage (22; 180) de l'effort de précontrainte exercé par les moyens de précontrainte (14; 186) sur le tronçon de sollicitation (17 ; 117) de la fibre optique de détection (15; 115).

11. Dispositif conforme à la revendication 10, caractérisé en ce que les moyens de précontrainte comprennent des moyens élastiques (14) et en ce que les moyens de réglage de l'effort de précontrainte comprennent au moins une cale (22) disposée pour mettre en tension les moyens élastiques (14).

12. Dispositif conforme à la revendication 9, caractérisé en ce que les moyens de précontrainte comprennent une lame élastique (14) définissant en outre l'axe de pivotement (x-x′) du bras (10).

13. Dispositif conforme à l'une des revendications 1 à 12, caractérisé en ce qu'une lame élastique (14) relie le bras (10) à un support (12) en définissant l'axe de pivotement (x-x′) du bras (10), la zone de transmission d'effort (16, 18) étant définie par des moyens (18) solidaires du bras (10) et par des moyens (16) solidaires du support (12).

14. Dispositif conforme à la revendication 13, caractérisé en ce que le support (12), la lame (14) et une partie au moins du bras (10) forment un corps monobloc.

15. Dispositif conforme à l'une des revendications 13 ou 14, caractérisé en ce que le support (12) comporte des moyens de fixation (76) situés au droit des moyens (72) d'application de la force à mesurer (F₀) relativement à l'axe de pivotement (x-x′) du bras (10).

16. Dispositif conforme à l'une des revendications 1 à 15, caractérisé en ce qu'il comprend des moyens de réglage de sensibilité (13) pour faire varier le rapport des distances entre, d'une part, la distance séparant l'axe de pivotement (x-x′) du bras (10) et le tronçon de sollicitation (17) de la fibre optique de détection (15) et, d'autre part la distance séparant l'axe de pivotement (x-x′) du bras (10) et le point (72) d'application de la force à mesurer (F₀) sur le bras (10).

17. Dispositif conforme à la revendication 16, caractérisé en ce que lesdits moyens de réglage de sensibilité comprennent un organe porte-fibre (13) monté au voisinage de la zone de transmission d'effort (16, 18), sur lequel est fixée la fibre optique de détection (15), cet organe porte-fibre (13) pouvant coulisser dans une direction parallèle au bras (10) pour faire varier la distance (c-a/2) séparant l'axe de pivotement (x-x′) du bras (10) et le tronçon de sollicitation (17) de la fibre optique de détection (15).

18. Dispositif conforme à l'une des revendications 1 à 17, caractérisé en ce que plusieurs tronçons de sollicitation de la même fibre optique de détection sont disposés dans le zone de transmission d'effort.

19. Dispositif conforme à l'une des revendications 1 à 18, caractérisé en ce qu'il comprend plusieurs zones de transmission d'effort (16a, 18a, 16b, 18b) et en ce que plusieurs tronçons de sollicitation (17a, 17b) appartenant à une même fibre optique de détection (15 ; 203, 220) sont disposés respectivement dans chacune de ces zones de transmission d'effort (17a, 17b).

20. Dispositif conforme à la revendication 19, caractérisé en ce que, la force à mesurer (F′₀) s'exerçant sur un organe unique (90 ; 218, 219), cet organe (90 ; 218, 219) est monté sur plusieurs bras articulés par l'intermédiaire de moyens (70a, 70b ; 252, 254) d'application de force, chacun desdits bras étant solidaire de moyens respectifs définissant en partie l'une des zones de transmission d'effort (16a, 18a, 16b, 18b).

21. Dispositif conforme à l'une des revendications 1 à 20, caractérisé en ce qu'il comprend en outre une fibre optique de référence (60; 205, 222), ayant sensiblement la même constitution et les mêmes dimensions que la fibre optique de détection (15; 203, 220), les extrémités de la fibre optique de référence (60; 205, 222) comportant des moyens de raccordement (7 ; 298) respectivement à ladite source de lumière (4 ; 272) et à au moins un détecteur de lumière (6b ; 276), et en ce que la fibre optique de référence (60; 205, 222) est disposée hors de la zone de transmission d'effort (16, 18 ; 16a, 18a, 16b, 18b).

22. Dispositif conforme à l'une des revendications 1 à 18, caractérisé en ce qu'il comprend une première et une seconde fibres optiques de détection (315, 316) comprenant chacune au moins un tronçon de sollicitation disposé dans une zone de transmission d'effort et une première et une seconde fibres optiques de référence (360, 361) disposées hors des zones de transmission d'effort, les fibres optiques de détection (315, 316) et de référence (360, 361) ayant sensiblement la même constitution et les mêmes dimensions, et en ce que le circuit optique entre les sources de lumière (304a, 304b) et les détecteurs de lumière (306a, 306b) est agencé pour que :
- la première fibre optique de détection (315) et la première fibre optique de référence (360) reçoivent des impulsions lumineuses émises par une première source de lumière (304a) à une première fréquence (f₁) ;
- la seconde fibre optique de détection (316) et la seconde fibre optique de référence (361) reçoivent des impulsions lumineuses émises par une seconde source de lumière (304b) à une seconde fréquence (f₂) distincte de la première fréquence (f₁) ;
- un premier détecteur de lumière (306a) reçoive les impulsions lumineuses transmises par la première fibre optique de détection (315) et par la seconde fibre optique de référence (361) ; et
- un second détecteur de lumière (306b) reçoive les impulsions lumineuses transmises par la seconde fibre optique de détection (316) et par la première fibre optique de référence (360).

23. Dispositif conforme à l'une des revendications 1 à 22, caractérisé en ce que la zone de transmission d'effort (16, 18) est adaptée pour provoquer des microcourbures du tronçon de sollicitation (17) en réponse à l'application de la force à mesurer (F₀).

24. Dispositif conforme à l'une des revendications 1 à 22, caractérisé en ce que la fibre optique de détection (115) est une fibre optique monomode, en ce que la source de lumière (104, 105) est agencée pour émettre une lumière polarisée dans la fibre optique de détection (115) et en ce que le dispositif comprend des moyens (106a, 106b, 107a, 107b, 108) pour analyser la polarisation de la lumière se propageant le long de la fibre optique de détection (115).

25. Appareillage (200) pour capter le courant électrique d'une ligne caténaire (201) depuis une motrice, comprenant une structure tubulaire déployable (206, 208, 210, 212), un archet (214) disposé à la partie supérieure de la structure tubulaire (206, 208, 210, 212) et supportant au moins une bande de frottement (218, 219), des moyens (216) pour appliquer l'archet (214) contre la ligne caténaire (201) caractérisé en ce qu'il comporte au moins un dispositif selon l'une des revendications 1 à 24, dans lequel chaque zone de transmission d'effort sur un tronçon de sollicitation d'une fibre optique de détection (203, 220) est définie par des moyens reliés à une bande de frottement (218, 219) et par des moyens solidaires de l'archet (214).

26. Appareillage (200) conforme à la revendication 25, caractérisé en ce que plusieurs bras solidaires respectivement de moyens définissant en partie une zone de transmission d'effort sur un tronçon de sollicitation d'une fibre optique de détection (203, 220) sont montes de façon pivotante entre l'archet (214) et une bande de frottement (218, 219) de façon que la totalité de l'effort de contact entre ladite bande de frottement (218, 219) et la ligne caténaire (201) soit transmis à l'archet (214) par l'intermédiaire desdits bras.

27. Appareillage (200) conforme à la revendication 26, caractérisé en ce que lesdits bras sont relies à chaque bande de frottement (218, 219) au voisinage des extrémités de cette bande de frottement (218, 219).

28. Appareillage (200) conforme à l'une des revendications 25 à 27, caractérisé en ce qu'à la bande de frottement (218, 219) correspond une fibre optique de détection (203, 220) et une fibre optique de référence (205, 222) raccordées à la même source de lumière (272) mais à des détecteurs de lumière distincts (274, 276) pour comparer les signaux lumineux se propageant le long de ces fibres optiques (203,220, 205, 222), la fibre optique de référence (205, 222) étant disposée hors de la zone de transmission d'effort.

## Patentansprüche

1. Vorrichtung zum Messen einer Kraft (F0, F′0) mit einer Erfassungslichtleitfaser (15; 115; 203, 220; 315, 316), deren Enden jeweils ein Anschlußmittel (7; 298; D1, D2, D3, D4) für eine Lichtquelle (4; 104; 272; 304a, 304b) und für mindestens einen Lichtdetektor (6a; 106a, 106b; 274; 306a, 306b) aufweisen, wobei mindestens ein Beaufschlagungsabschnitt (17; 17a, 17b; 117) der Erfassungslichtleitfaser (15; 115; 203, 220; 315, 316) in einem Kraftübertragungsbereich (16, 18; 16a, 18a, 16b, 18b; 116, 118) angeordnet ist, der zum Ausüben einer Spannung auf den Beaufschlagungsbereich (17; 17a, 17b; 117) der Erfassungslichtleitfaser ((15; 115; 203, 220; 315, 316) als Reaktion auf die Anwendung der zu messenden Kraft (F0; F′0)) ausgebildet ist, dadurch gekennzeichnet, daß die Vorrichtung einen um eine Kippachse (x-x′; 114) drehbar angebrachten Schenkel (10; 110) aufweist, daß Mittel (70; 70a, 70b; 170; 252, 254) zur Anwendung der zu messenden Kraft (F0; F′0) auf dem Schenkel (10; 110) befestigt sind und daß der Kraftübertragungsbereich (16, 18; 16a, 18a, 16b, 18b; 116, 118) teilweise von mit dem Schenkel (10; 110) fest verbundenen Mitteln (18; 18a, 18b; 118) bestimmt ist.

2. Vorrichtung nach Anspruch 1, dadurch gekennzeichnet, daß die Mittel (70; 170; 252, 254) zur Anwendung der zu messenden Kraft (F0) so auf dem Schenkel (10; 110) befestigt sind, daß die auf die Mittel (70; 170; 252, 254) einwirkenden Momente nicht auf den Schenkel (10; 110) übertragen werden.

3. Vorrichtung nach Anspruch 1 oder 2, dadurch gekennzeichnet, daß die Mittel (70; 170; 252, 254) zur Anwendung der zu messenden Kraft (F0) gegenüber dem Schenkel (10; 110) eine Rotationsfreiheit in einer Richtung (y-y′; 172; 262, 264) aufweisen, die im wesentlichen parallel zur Kippachse (x-x′; 114) des Schenkels (10; 110) verläuft.

4. Vorrichtung nach Anspruch 3, dadurch gekennzeichnet, daß die Richtung (y-y′; 172), in der die Mittel (70; 170) zur Anwendung der zu messenden Kraft (F0) gegenüber dem Schenkel (10; 110) eine Rotationsfreiheit aufweisen, mit der Kippachse (x-x′; 114) des Schenkels (10; 110) eine Ebene bilden, wobei der Kraftübertragungsbereich (16, 18; 116, 118) im wesentlichen in dieser Ebene (P) angeordnet ist.

5. Vorrichtung nach einem der Ansprüche 1 bis 5, dadurch gekennzeichnet, daß sich der Beaufschlagungsabschnitt (17) der Erfassungslichtleitfaser (15) in einer zur Kippachse (x-x′) des Schenkels (10) im wesentlichen parallelen Richtung erstreckt.

6. Vorrichtung nach einem der Ansprüche 1 bis 5, dadurch gekennzeichnet, daß der Kraftübertragungsbereich aus zwei Klemmflächen (16, 18; 116; 118) gebildet ist, von denen eine (18; 118) mit dem Schenkel (10; 110) fest verbunden ist.

7. Vorrichtung nach einem der Ansprüche 1 bis 6, dadurch gekennzeichnet, daß die Mittel (70) zur Anwendung der zu messenden Kraft (F0) derart auf dem Schenkel (10) angeordnet sind, daß die zu messende Kraft (F0) auf den Schenkel (10) näher an der Kippachse (x-x′) des Schenkels (10) als an dem Kraftübertragungsbereich (16, 18) einwirkt.

8. Vorrichtung nach einem der Ansprüche 1 bis 6, dadurch gekennzeichnet, daß die Mittel (170) zur Anwendung der zu messenden Kraft (F0) derart auf dem Schenkel (110) angeordnet sind, daß die zu messende Kraft (F0) auf den Schenkel (10) weiter von der Kippachse (114) des Schenkels (110) als vom Kraftübertragungsbereich (16, 18) entfernt einwirkt.

9. Vorrichtung nach einem der Ansprüche 1 bis 8, dadurch gekennzeichnet, daß sie Vorspannungsmittel (14; 186) enthält, mit denen eine Vorspannung auf den Beaufschlagungsabschnitt (17; 117) der Erfassungslichtleitfaser (15; 115) unabhängig von der Anwendung der zu messenden Kraft (F0) ausgeübt wird.

10. Vorrichtung nach Anspruch 9, dadurch gekennzeichnet, daß sie eine Regeleinrichtung (22; 180) für die von den Vorspannungsmitteln (14; 186) auf den Beaufschlagungsabschnitt (17; 117) der Erfassungslichtleitfaser (15; 115) ausgeübte Vorspannung enthält.

11. Vorrichtung nach Anspruch 10, dadurch gekennzeichnet, daß die Vorspannungsmittel elastische Mittel (14) aufweisen und daß die Regeleinrichtung für die Vorspannung mindestens eine Beilagscheibe (22) aufweist, um die elastischen Mittel (14) unter Spannung zu setzen.

12. Vorrichtung nach Anspruch 9, dadurch gekennzeichnet, daß die Vorspannungsmittel einen elastischen Streifen (14) enthalten, der außerdem die Kippachse (x-x′) des Schenkels (10) bildet.

13. Vorrichtung nach einem der Ansprüche 1 bis 12, dadurch gekennzeichnet, daß ein elastischer Streifen (14) den Schenkel (10) mit einem Träger (12) verbindet und damit die Kippachse (x-x′) des Schenkels (10) bildet, wobei der Kraftübertragungsbereich (16, 18) aus mit dem Schenkel (10) fest verbundenen Teilen (18) und aus mit dem Träger (12) fest verbundenen Teilen (16) gebildet ist.

14. Vorrichtung nach Anspruch 13, dadurch gekennzeichnet, daß der Träger (12), der Streifen (14) und mindestens ein Teil des Schenkels (10) einen einstückigen Körper bilden.

15. Vorrichtung nach Anspruch 13 oder 14, dadurch gekennzeichnet, daß der Träger (12) Befestigungsmittel (76) aufweist, die in Bezug auf die Kippachse (x-x′) des Schenkels (10) den Mitteln (72) zur Anwendung der zu messenden Kraft (FO) gegenüberliegend angeordnet sind.

16. Vorrichtung nach einem der Ansprüche 1 bis 15, dadurch gekennzeichnet, daß sie Mittel (13) zur Einstellung der Empfindlichkeit aufweist, um das Verhältnis der Entfernungen der Kippachse (x-x′) des Schenkels (10) zum Beaufschlagungsabschnitt (17) der Erfassungslichtleitfaser (15) einerseits und der Kippachse (x-x′) des Schenkels (10) zum Punkt der Anwendung der zu messenden Kraft (FO) auf den Schenkel (10) andererseits zu verändern.

17. Vorrichtung nach Anspruch 16, dadurch gekennzeichnet, daß die besagten Mittel (13) zur Einstellung der Empfindlichkeit ein Faserträgerteil (13) aufweisen, das in der Nähe des Kraftübertragungsbereiches (16, 18) montiert ist und auf dem die Erfassungslichtleitfaser (15) befestigt ist, wobei dieses Faserträgerteil (13) in einer zum Schenkel (10) parallelen Richtung verschiebbar ist, um die Entfernung (c-a/2) zwischen der Kippachse (x-x′) des Schenkels (10) und dem Beaufschlagungsabschnitt (17) der Erfassungslichtleitfaser (15) zu verändern.

18. Vorrichtung nach einem der Ansprüche 1 bis 17, dadurch gekennzeichnet, daß mehrere Beaufschlagungsabschnitte der gleichen Erfassungslichtleitfaser in dem Kraftübertragungsbereich angeordnet sind.

19. Vorrichtung nach einem der Ansprüche 1 bis 18, dadurch gekennzeichnet, daß sie mehrere Kraftübertragungsbereiche (16a, 18a, 16b, 18b) aufweist und daß mehrere Beaufschlagungsabschnitte (17a, 17b), die einer gleichen Erfassungslichtleitfaser (15; 203, 220) zugeordnet sind, jeweils in diesen Kraftübertragungsbereichen (17a, 17b) angeordnet sind.

20. Vorichtung nach Anspruch 19, dadurch gekennzeichnet, daß die zu messende Kraft (F′0) auf ein einzelnes Teil (90; 218, 219) einwirkt, wobei dieses Teil (90; 218, 219) auf mehrere, über die Mittel (70a, 70b; 252, 254) zur Anwendung der Kraft angelenkte Schenkel montiert ist, und wobei jeder dieser Schenkel mit den entsprechenden Mitteln verbunden ist, die teilweise einen der Kraftübertragungsbereiche (16a, 18a, 16b, 18b) bilden.

21. Vorrichtung nach einem der Ansprüche 1 bis 20, dadurch gekennzeichnet, daß sie außerdem eine Referenzlichtleitfaser (60; 205, 222) mit im wesentlichen gleicher Beschaffenheit und gleichen Abmessungen wie die Erfassungslichtleitfaser (15; 203, 220) aufweist, wobei die Enden der Referenzlichtleitfaser (60; 205, 222) jeweils mit einem Anschlußmittel (7; 298) für die Lichtquelle (4; 272) und mindestens einem Lichtdetektor (6b; 276) versehen sind, und daß die Referenzlichtleitfaser (60; 205, 222) außerhalb des Kraftübertragungsbereiches (16, 18; 16a, 18a, 16b, 18b) angeordnet ist.

22. Vorrichtung nach einem der Ansprüche 1 bis 18, dadurch gekennzeichnet, daß er eine erste und eine zweite Erfassungslichtleitfaser (315, 316), von denen jede mindestens einen in einem Kraftübertragungsbereich angeordneten Beaufschlagungsabschnitt umfaßt, sowie eine erste und eine zweite Referenzlichtleitfaser (360, 361) aufweist, die außerhalb der Kraftübertragungsbereiche angeordnet sind, wobei die Erfassungslichtleitfasern (315, 316) und die Referenzlichtleitfasern (360, 361) im wesentlichen die gleiche Beschaffenheit und die gleichen Abmessungen haben, und daß der optische Kreis zwischen den Lichtquellen (304a, 304b) und den Lichtdetektoren (306a, 306b) so aufgebaut ist, daß:
- die erste Erfassungslichtleitfaser (315) und die erste Referenzlichtleitfaser (360) Lichtimpluse emfangen, die von einer ersten Lichtquelle (304a) mit einer ersten Frequenz (fl) gesendet werden;
- die zweite Erfassungslichtleitfaser (316) und die zweite Referenzlichtleitfaser (361) Lichtimpluse empfangen, die von einer zweiten Lichtquelle (304b) mit einer zweiten Frequenz (f2), die sich von der ersten Frequenz (f1) unterscheidet, gesendet werden;
- ein erster Lichtdetektor (306a) die Lichtimpulse empfängt, die von der ersten Erfassungslichtleitfaser (315) und von der zweiten Referenzlichtleitfaser (361) übertragen werden; und
- ein zweiter Lichtdetektor (306b) die Lichtimpulse empfängt, die von der zweiten Erfassungslichtleitfaser (316) und von der ersten Referenzlichtleitfaser (360) übertragen werden.

23. Vorrichtung nach einem der Ansprüche 1 bis 22, dadurch gekennzeichnet, daß der Kraftübertragungsbereich (16, 18) so ausgebildet ist, daß er als Reaktion auf die Anwendung der zu messenden Kraft (F0) Mikrokrümmungen des Beaufschlagungsabschnittes (17) verursacht.

24. Vorrichtung nach einem der Ansprüche 1 bis 22, dadurch gekennzeichnet, daß die Erfassungslichtleitfaser (115) eine Monomode-Lichtleitfaser ist, daß die Lichtquelle (104, 105) so beschaffen ist, daß sie polarisiertes Licht in die Erfassungslichtleitfaser (115) schickt, und daß die Vorichtung Mittel (106a, 106b, 107a, 107b, 108) zum Analysieren der Polarisation des sich in der Erfassungslichtleitfaser (115) ausbreitenden Lichts besitzt.

25. Apparat (200) zur Stromaufnahme aus einer Oberleitung (201) aus einem Triebwagen, mit einem entfaltbaren röhrenförmigen Aufbau (206, 208, 210, 212), einem auf dem Oberteil des röhrenförmigen Aufbaus (206, 208, 210, 212) angeordneten und mindestens einen Kontaktstreifen (218, 219) tragenden Bügel (214), mit Mitteln (216) zum Anlegen des Bügels (214) an die Oberleitung (201), dadurch gekennzeichnet, daß er mindestens eine Einrichtung nach einem der Ansprüche 1 bis 24 enthält, in welcher jeder Bereich der Übertragung einer Kraft auf einen Beaufschlagungsabschnitt einer Erfassungslichtleitfaser (203, 220) von mit einem Kontaktstreifen (218, 219) verbundenen Mitteln und von mit dem Bügel (214) fest verbundenen Mitteln gebildet ist.

26. Apparat (200) nach Anspruch 25, dadurch gekennzeichnet, daß mehrere Schenkel, die jeweils mit Mitteln fest verbunden sind, welche teilweise einen Bereich der Übertragung der Kraft auf einen Beaufschlagungsabschnitt einer Erfassungslichtleitfaser (203, 220) bilden, zwischen dem Bügel (214) und einem Kontaktstreifen (218, 219) derart angelenkt sind, daß die gesamte Kontaktbeanspruchung zwischen dem besagten Kontaktstreifen (218, 219) und der Oberleitung (201) über die besagten Schenkel auf den Bügel (214) übertragen wird.

27. Apparat (200) nach Anspruch 26, dadurch gekennzeichnet, daß die besagten Schenkel mit jedem Kontaktstreifen (218, 219) verbunden sind, und zwar nahe den Enden dieses Kontakstreifens (218, 219).

28. Apparat (200) nach einem der Ansprüche 25 bis 27, dadurch gekennzeichnet, daß dem Kontaktstreifen (218, 219) eine Erfassungslichtleitfaser (203, 220) und eine Referenzlichtleitfaser (205, 222) zugeordnet sind, die mit derselben Lichtquelle (27), jedoch mit unterschiedlichen Lichtdetektoren (274, 276) verbunden sind, um die Lichtsignale zu vergleichen, die sich in diesen Lichtleitfasern (203, 220, 205, 222) ausbreiten, wobei die Referenzlichtleitfaser (205, 222) außerhalb des Kraftübertragungsbereiches angeordnet ist.

## Claims

1. A device to measure a force (F0, F′0) comprising a detection optical fiber (15; 115; 203, 220; 315, 316) whose ends comprise means of connection (7; 298; D1, D2, D3, D4) to a light source (4; 104; 272; 304a; 304b) and to at least one light detector (6a; 106a, 106b; 274; 306a, 306b), respectively, with at least one stress section (17; 17a, 17b; 117) of the detection optical fiber (15; 115; 203, 220; 315, 316) located in a stress transmission area (16, 18; 16a, 18a, 16b, 18b; 116, 118) adapted to exert a stress on the stress section (17; 17a, 17b; 117) of the detection optical fiber (15; 115; 203, 220; 315, 316) in response to the application of the force to be measured (F0, F′0), characterised in that it comprises an arm (10; 110) swinging around a pivoting axis (x-x′; 114), in that means (70; 70a, 70b; 170; 252, 254) of application of the force to be measured (F0, F′0) are fitted on the arm (10; 110) and that the stress transmission area (16, 18; 16a, 18a, 16b, 18b; 116, 118) is partly defined by means (18; 18a, 18b; 118) attached to the arm (10; 110).

2. A device according to claim 1, characterised in that the means (70; 170; 252, 254) of application of the force to be measured (F0) are fitted on the arm (10; 110) in such a way that the torque exerted on the means (70; 170; 252, 254) are not transmitted to the arm (10; 110).

3. A device according to claim 1 or 2, characterised in that the means (70; 170; 252, 254) of application of the force to be measured (F0) are free to rotate with respect to the arm (10; 110) along a direction (y-y′; 172; 262, 264) substantially parallel to the pivoting axis (x-x′; 114) of the arm (10; 110).

4. A device according to claim 3, characterised in that the direction (y-y′; 172) along which the means (70; 170) of application of the force to be measured (F0) are free to rotate with respect to the arm (10; 110) and the pivoting axis (x-x′; 114) of the arm (10; 110) define a plane (P), with the stress transmission area (16, 18; 116, 118) arranged substantially parallel to this plane (P).

5. A device according to one of claims 1 to 4, characterised in that the stress section (17) of the detection optical fiber (15) extends in a direction substantially parallel to the pivoting axis (x-x′) of the arm (10).

6. A device according to one of claims 1 to 5, characterised in that the stress transmission area is defined by two pinching surfaces (16, 18; 116, 118) one of which (18; 118) is attached to the arm (10; 110).

7. A device according to one of claims 1 to 6, characterised in that the means (70) of application of the force to be measured (F0) are arranged on the arm (10) in such a way that the force to be measured (F0) is exerted on the arm (10) closer to the pivoting axis (x-x′) of the arm (10) than to the stress transmission area (16, 18).

8. A device according to one of claims 1 to 6, characterised in that the means (170) of application of the force to be measured (F0) are arranged on the arm (110) in such a way that the force to be measured (F0) is exerted on the arm (110) farther from the pivoting axis (114) of the arm (110) than from the stress transmission area (116, 118).

9. A device according to one of claims 1 to 8, characterised in that it comprises prestressing means (14; 186) to exert a prestressing load on the stress section (17; 117) of the detection optical fiber (15; 115) independently of the application of the force to be measured (F0).

10. A device according to claim 9, characterised in that it comprises means of adjustment (22; 180) of the prestressing load exerted by the prestressing means (14; 186) on the stress section (17; 117) of the detection optical fiber (15; 115).

11. A device according to claim 10, characterised in that the prestressing means comprise elastic means (14) and in that the means of adjustment of the prestressing load comprise at least one wedge (22) positioned so as to put the elastic means (14) under tension.

12. A device according to claim 9, characterised in that the prestressing means comprise an elastic blade (14) which further defines the pivoting axis (x-x′) of the arm (10).

13. A device according to one of claims 1 to 12, characterised in that an elastic blade (14) connects the arm (10) to a support (12) while defining the pivoting axis (x-x′) of the arm (10), with the stress transmission area (16, 18) defined by means (18) attached to the arm (10) and by means (16) attached to the support (12).

14. A device according to claim 13, characterised in that the support (12), the blade (14) and at least one part of the arm (10) form a body consisting of a single piece.

15. A device according to claim 13 or 14, characterised in that the support (12) comprises fastening means (76) located at right angles to the means (72) of application of the force to be measured (F0) with respect to the pivoting axis (x-x′) of the arm (10).

16. A device according to one of claims 1 to 15, characterised in that it comprises sensitivity adjustment means (13) to vary the distance ratio between, on the one hand, the distance separating the pivoting axis (x-x′) of the arm (10) and the stress section (17) of the detection optical fiber (15) and, on the other hand, the distance separating the pivoting axis (x-x′) of the arm (10) and the point (72) of application of the force to be measured (F0) on the arm (10).

17. A device according to claim 16, characterised in that the said sensitivity adjustment means comprise a fiber carrying organ (13) fitted near the stress transmission area (16, 18), on which the detection optical fiber (15) is fixed, with this fiber carrying organ (13) able to slide in a direction parallel to the arm (10) so as to vary the distance (c - a/2) separating the pivoting axis (x-x′) of the arm (10) and the stress section (17) of the detection optical fiber (15).

18. A device according to one of claims 1 to 17, characterised in that several stress sections of the same detection optical fiber are arranged in the stress transmission area.

19. A device according to one of claims 1 to 18, characterised in that it comprises several stress transmission areas (16a, 18a, 16b, 18b) and that several stress sections (17a, 17b) belonging to one same detection optical fiber (15; 203, 220) are arranged respectively in each of these stress transmission areas (17a, 17b).

20. A device according to claim 19, characterised in that the force to be measured (F′0) is exerted on a single organ (90; 218, 219), with this organ (90; 218, 219) fitted on several arms hinged by means (70a, 70b; 252, 254) of application of force, each of the said arms being attached to respective means partly defining one of the stress transmission areas (16a, 18a, 16b, 18b).

21. A device according to one of claims 1 to 20, characterised in that it further comprises a reference optical fiber (60; 205, 222) having substantially the same make-up and the same dimensions as the detection optical fiber (15; 203, 220), with the ends of the reference optical fiber (60; 205, 222) comprising means of connection (7; 298) to the said light source (4; 272) and to at least one light detector (6b, 276), respectively,
and that the reference optical fiber (60; 205, 222) is located outside the stress transmission area (16, 18; 16a, 18a, 16b, 18b).

22. A device according to one of claims 1 to 18, characterised in that it comprises a first and second detection optical fibers (315, 316) each comprising at least one stress section located in a stress transmission area and a first and second reference optical fibers (360, 361) located outside the stress transmission areas, with the detection optical fibers (315, 316) and reference optical fibers (360, 361) having substantially the same make-up and the same dimensions, and in that the optical circuit between the light sources (304a, 304b) and the light detectors (306a, 306b) is adjusted so that:
- the first detection optical fiber (315) and the first reference optical fiber (360) receive light impulses given out by a first light source (304a) at a first frequency (f1);
- the second detection optical fiber (316) and the second reference optical fiber (361) receive light impulses given out by a second light source (304b) at a second frequency (f2) different from the first frequency (f1);
- a first light detector (306a) receives the light impulses transmitted by the first detection optical fiber (315) and by the second reference optical fiber (361); and
- a second light detector (306b) receives the light impulses transmitted by the second detection optical fiber (316) and by the first reference optical fiber (360).

23. A device according to one of claims 1 to 22, characterised in that the stress transmission area (16, 18) is adapted to provoke microbends of the stress section (17) in response to the application of the force to be measured (F0).

24. A device according to one of claims 1 to 22, characterised in that the detection optical fiber (115) is a monomode optical fiber, in that the light source is adjusted to give out a polarised light in the detection optical fiber (115) and in that the device comprises means (106a, 106b, 107a, 107b, 108) to analyse the polarisation of the light propagating along the detection optical fiber (115).

25. Instrumentation (200) to capture the electric current of a contact line (201) from a rail car, comprising an unfoldable tubular structure (206, 208, 210, 212), a bow (214) located on the upper part of the tubular structure (206, 208, 210, 212) and supporting at least one frictional strip (218, 219), means (216) to apply the bow (214) against the contact line (201) characterised in that it comprises at least one device according to one of claims 1 to 24 in which each stress transmission area on a stress section of a detection optical fiber (203 220) is defined by means connected to a frictional strip (218, 219) and by means attached to the bow (214).

26. Instrumentation (200) according to claim 25, characterised in that several arms respectively attached to means partly defining a stress transmission area on a stress section of a detection optical fiber (203, 220) are fitted in a pivotal manner between the bow (214) and a frictional strip (218, 219) so that the totality of the contact stress between the said frictional strip (218, 219) and the contact line (201) is transmitted to the bow (214) via the said arms.

27. Instrumentation (200) according to claim 26, characterised in the said arms are connected to each frictional strip (218, 219) near the ends of this frictional strip (218, 219).

28. Instrumentation (200) according to one of claims 25 to 27, characterised in that the frictional strip (218, 219) is matched with a detection optical fiber (203, 220) and a reference optical fiber (205, 222) connected to the same light source (272) but to different light detectors (274, 276) to compare the light signals propagating along these optical fibers (203, 220, 205, 222), with the reference optical fiber (205, 222) located outside the stress transmission area.
